# EUROPEAN PATENT APPLICATION

(11) **EP 4 213 418 A1**
(43) Date of publication of application: **19.07.2023**
(21) Application number: 21879297.6
(22) Date of filing: 09.10.2021

(54) **INTERFACE SECURITY PROTECTION METHOD AND DEVICE**

(30) Priority: 13.10.2020 CN 202011092391
(71) Applicant: Huawei Technologies Co., Ltd., Shenzhen, Guangdong 518129 (CN)
(72) Inventor: YANG, Wenjin, Shenzhen Guangdong 518129 (CN)
(74) Representative: Gill Jennings & Every LLP
(86) International application number: PCT/CN2021/122760
(87) International publication number: WO 2022/078252

(57) **Abstract**

Embodiments of this application provide an interface security protection method and apparatus, to resolve prior-art problems of high costs and poor flexibility of performing interface security protection based on IPsec. The method includes: A first entity sends a first message to a network repository function entity, where the first message carries a session parameter. The first entity receives a second message sent by the network repository function entity, where the second message carries configuration information corresponding to M second entities that meet the session parameter, m second entities in the M second entities support interface security protection, M is a positive integer, and m is a positive integer not greater than M. When determining that interface security protection needs to be performed, the first entity selects a target second entity from the m second entities. According to the method provided in embodiments of this application, interface security no longer needs to be ensured by relying on a dedicated physical or network layer security protocol, so that deployment costs can be reduced.

## Description

### CROSS-REFERENCE TO RELATED APPLICATION

This application claims priority to Chinese Patent Application No. 202011092391.6, filed with the China National Intellectual Property Administration on October 13, 2020 and entitled "INTERFACE SECURITY PROTECTION METHOD AND APPARATUS", which is incorporated herein by reference in its entirety.

### TECHNICAL FIELD

This application relates to the field of communication technologies, and in particular, to an interface security protection method and apparatus.

### BACKGROUND

In a 5G communication system architecture, there are service-based architecture (service-based architecture, SBA) interfaces (for example, Nnssf and Nnef interfaces) and non-SBA interfaces (for example, N3, N4, and N9 interfaces) between network functions (network functions, NFs) of a core network and between the core network and an access network.

The SBA interface supports security protection of transmitted information by using a hypertext transfer protocol over secure socket layer (hypertext transfer protocol over secure socket layer, HTTPS), and encryption, decryption, integrity protection, and the like may be performed on transmitted data by using a transport layer security (transport layer security, TLS) protocol.

For protection of the non-SBA interfaces, for example, N3, N4, and N9, Internet protocol security (internet protocol security, IPsec) is usually used to protect security of transmitted information. However, when IPsec is used for security protection of interfaces such as N3, N4, and N9, dedicated IPsec hardware is usually required, and IPsec tunnels need to be planned and established in advance. This requirement imposes great restrictions on deployment in 5G MEC scenarios.

### SUMMARY

Embodiments of this application provide an interface security protection method and apparatus, to resolve prior-art problems of high costs and poor flexibility of performing interface security protection based on IPsec.

According to a first aspect, an embodiment of this application provides an interface security protection method. The method includes: A first entity sends a first message to a network repository function entity, where the first message carries a session parameter. The first entity receives a second message sent by the network repository function entity, where the second message carries configuration information corresponding to M second entities that meet the session parameter, m second entities in the M second entities support interface security protection, M is a positive integer, and m is a positive integer not greater than M. When determining that interface security protection needs to be performed, the first entity selects a target second entity from the m second entities.

According to the foregoing technical solution, in this embodiment of this application, when determining that interface security protection needs to be performed, the first entity may select, from the m second entities, a second entity having a same interface security protection capability as the first entity as the target second entity, so that two entities that perform communication have a same interface security protection capability. During communication, the two entities may perform interface security protection (for example, encryption and decryption and integrity protection) on transmitted data. According to the method provided in this embodiment of this application, interface security no longer needs to be ensured by relying on a dedicated physical or network layer security protocol (for example, IPsec), so that MEC deployment costs can be reduced.

In a possible design, the first message further includes a first parameter indicating an interface security protection capability; and m is equal to M. In the foregoing design, when requesting the network repository function entity to discover the second entity, the first entity may indicate the network repository function entity to search for the second entity having the interface security protection capability, so that all second entities fed back by the network repository function entity to the first entity have the interface security protection capability. When the interface security protection capability is the interface security protection capability of the first entity, all the second entities fed back by the network repository function entity have the same interface security protection capability as the first entity. Therefore, the first entity may directly perform selection from the m second entities, and the first entity does not need to determine the interface security protection capability.

In a possible design, configuration information corresponding to the m second entities further includes a network slice that the supports interface security protection and that is in one or more network slices of the second entities corresponding to the configuration information. That the first entity selects a target second entity from the m second entities includes: determining X second entities based on the configuration information corresponding to the m second entities, where each of the X second entities has at least one network slice that supports the interface security protection, and X is a positive integer not greater than m; and selecting at least one second entity from the X second entities as the target second entity. In the foregoing manner, the first entity may preferentially select a second entity of a network slice that supports the interface security protection as the target second entity.

In a possible design, the configuration information of the m second entities further includes a security protection parameter of the network slice that supports the interface security protection. In the foregoing design, communication security can be improved.

In a possible design, after the first entity selects the target second entity from the m second entities, the first entity performs a handshake at a first protocol layer with a third entity in the target second entity, where the first protocol layer is used to implement the interface security protection; and the first entity establishes a connection at a second protocol layer to the third entity, where the second protocol layer is used to implement data packet forwarding control. In the foregoing design, the first entity having the interface security protection capability performs the handshake at the first protocol layer with the third entity, so that the first entity and the third entity can process data at the first protocol layer in subsequent communication, to implement the interface security protection between the first entity and the third entity and improve communication security.

In a possible design, after the first entity selects the target second entity from the m second entities, the first entity sends a third message to a third entity in the target second entity, where the third message is used to request to establish a connection at a second protocol layer, and the second protocol layer is used to implement data packet forwarding control; the first entity receives, from the third entity, a rejection message corresponding to the third message; the first entity performs a handshake at a first protocol layer with the third entity, where the first protocol layer is used to implement the interface security protection; the first entity sends a fourth message to the third entity, where the fourth message is used to request to establish the connection at the second protocol layer; and the first entity receives, from the target second entity, a response message corresponding to the fourth message. In the foregoing design, when the connection at the second protocol layer is established, if the first entity does not enable the interface security protection, the third entity may indicate, by using the rejection message, the first entity to activate the interface security protection.

In a possible design, the rejection message corresponding to the third message may carry a rejection cause, and a value of the rejection cause is a cause value indicating that no interface security protection is performed on the third message.

In a possible design, after the first entity selects the target second entity from the m second entities, the first entity establishes a connection at a second protocol layer to a third entity in the target second entity, where the second protocol layer is used to implement data packet forwarding control; the first entity sends a fifth message to the third entity, where the fifth message is used to request to establish a session at the second protocol layer; the first entity receives, from the third entity, a rejection message corresponding to the fifth message; the first entity performs a handshake at a first protocol layer with the third entity, where the first protocol layer is used to implement the interface security protection; the first entity sends a sixth message to the third entity, where the sixth message is used to request to establish the session at the second protocol layer; and the first entity receives, from the third entity, a response message corresponding to the sixth message. In the foregoing design, when the session at the second protocol layer is established, if the first entity does not enable the interface security protection, the third entity may indicate, by using the rejection message, the first entity to activate the interface security protection.

In a possible design, the rejection message corresponding to the fifth message may carry a rejection cause, and a value of the rejection cause is a cause value indicating that no interface security protection is performed on the fifth message.

In a possible design, that the first entity determines that interface security protection needs to be performed includes: The first entity determines, based on at least one of the following attributes, that interface security protection needs to be performed: a geographical location of the second entity, an attribute of a network slice in a network, and a multi-access edge computing scenario. In the foregoing design, the first entity may determine whether communication is vulnerable to an attack, to determine whether to enable the interface security protection. For example, in the multi-access edge computing scenario, the second entity is vulnerable to an attack at an edge, and the first entity determines to enable the interface security protection, so that communication security can be improved.

In a possible design, after the first entity selects the target second entity from the m second entities, the first entity sends a seventh message to the third entity in the target second entity, where the seventh message indicates the third entity to add a header corresponding to the first protocol layer, and the first protocol layer is used to implement the interface security protection. In the foregoing design, the first entity may indicate the third entity to activate the interface security protection.

In a possible design, the seventh message carries an outer header creation (Outer Header Creation) information element, and the Outer Header Creation information element indicates the third entity to add the header corresponding to the first protocol layer.

In a possible design, after the first entity sends the seventh message to the third entity in the target second entity, the first entity sends an eighth message to the third entity, where the eighth message indicates the third entity to remove the header corresponding to the first protocol layer. In the foregoing design, the first entity may indicate the third entity to stop the interface security protection.

In a possible design, the eighth message carries an outer header removal (Outer Header Removal) information element, and the Outer Header Removal information element indicates the third entity to remove the header corresponding to the first protocol layer.

In a possible design, after the first entity selects the target second entity from the m second entities, the first entity sends second information to an access network device, where the second information indicates to enable the interface security protection. In the foregoing design, the first entity may indicate the access network device to enable the interface security protection.

In a possible design, the second information carries a security indication (Security Indication) information element, and the Security Indication indicates to enable the interface security protection.

In a possible design, the second information further carries third information, and the third information is used to determine the security protection parameter.

In a possible design, the third information may include but is not limited to information such as a quality of service flow identifier (QoS flow identifier, QFI) on which interface security protection needs to be performed, a certificate corresponding to the QFI, a network slice on which interface security protection needs to be performed, and a certificate corresponding to the network slice. In the foregoing design, when determining the security protection parameter based on the third information, the access network device may encrypt and decrypt, based on the third information, a QoS flow (QoS Flow) corresponding to the QFI. Different QFIs or network slices may use different certificates for encryption and decryption. In the foregoing manner, a slice isolation requirement and a differentiated security requirement can be met.

According to a second aspect, an embodiment of this application provides an interface security protection method. The method includes: A network repository function entity receives a first message sent by a first entity, where the first message carries a session parameter. The network repository function entity selects, based on the session parameter, M second entities that meet the session parameter, where m second entities in the M second entities support interface security protection, M is a positive integer, and m is a positive integer not greater than M. The network repository function entity sends a second message to the first entity, where the second message carries configuration information corresponding to the M second entities that meet the session parameter.

According to the foregoing technical solution, in this embodiment of this application, when determining that interface security protection needs to be performed, the first entity may select, from the m second entities, a second entity having a same interface security protection capability as the first entity as a target second entity, so that two entities that perform communication have a same interface security protection capability. During communication, the two entities may perform interface security protection (for example, encryption and decryption and integrity protection) on transmitted data. According to the method provided in this embodiment of this application, interface security no longer needs to be ensured by relying on a dedicated physical or network layer security protocol (for example, IPsec), so that MEC deployment costs can be reduced.

In a possible design, the first message further includes a first parameter indicating an interface security protection capability. That the network repository function entity selects, based on the session parameter, M second entities includes: The network repository function entity determines the M second entities that meet the session parameter and that support the interface security protection capability, where m is equal to M. In the foregoing design, when requesting the network repository function entity to discover the second entity, the first entity may indicate the network repository function entity to search for the second entity having the interface security protection capability, so that all second entities fed back by the network repository function entity to the first entity have the interface security protection capability. When the interface security protection capability is the interface security protection capability of the first entity, all the second entities fed back by the network repository function entity have the same interface security protection capability as the first entity. Therefore, the first entity may directly perform selection from the m second entities, and the first entity does not need to determine the interface security protection capability.

In a possible design, configuration information corresponding to the m second entities further includes a network slice that supports interface security protection and that is in one or more network slices of the second entities corresponding to the configuration information. In the foregoing manner, the first entity may preferentially select a second entity of a network slice that supports the interface security protection as the target second entity.

In a possible design, the configuration information of the m second entities further includes a security protection parameter of the network slice that supports the interface security protection. In the foregoing design, communication security can be improved.

According to a third aspect, an embodiment of this application provides an interface security protection method. The method includes: A third entity receives a third message sent by a first entity, where the third message is used to request to establish a connection at a second protocol layer, and the second protocol layer is used to implement data packet forwarding control. If the connection at the second protocol layer requires security protection, when determining that the third message is not sent based on interface security protection, the third entity sends, to the first entity, a rejection message corresponding to the third message. The third entity performs a handshake at a first protocol layer with the first entity, where the first protocol layer is used to implement the interface security protection. The third entity receives a fourth message sent by the first entity, where the fourth message is used to request to establish the connection at the second protocol layer. The third entity sends, to the first entity, a response message corresponding to the fourth message.

In this embodiment of this application, when a session at the second protocol layer is established, when the connection at the second protocol layer is established, if the first entity does not enable the interface security protection, the third entity may indicate, by using the rejection message, the first entity to activate the interface security protection.

In a possible design, the rejection message corresponding to the third message may carry a rejection cause, and a value of the rejection cause is a cause value indicating that no interface security protection is performed on the third message.

In a possible design, that the third entity determines that the third message is not sent based on interface security protection includes: The third entity determines that the third message does not include a header corresponding to the first protocol layer.

According to a fourth aspect, an embodiment of this application provides an interface security protection method. The method includes: A third entity establishes a connection at a second protocol layer to a first entity, where the second protocol layer is used to implement data packet forwarding control. The third entity receives a fifth message sent by the first entity, where the fifth message is used to request to establish a session at the second protocol layer. If the session at the second protocol layer requires security protection, when determining that the fifth message is not sent based on the interface security protection, the third entity sends, to the first entity, a rejection message corresponding to the fifth message. The third entity performs a handshake at a first protocol layer with the first entity, where the first protocol layer is used to implement the interface security protection. The third entity receives a sixth message sent by the first entity, where the sixth message is used to request to establish the session at the second protocol layer. The third entity sends, to the first entity, a response message corresponding to the sixth message.

In this embodiment of this application, when the session at the second protocol layer is established, if the first entity does not enable the interface security protection, the third entity may indicate, by using the rejection message, the first entity to activate the interface security protection.

In a possible design, the rejection message corresponding to the fifth message may carry a rejection cause, and a value of the rejection cause is a cause value indicating that no interface security protection is performed on the fifth message.

In a possible design, that the third entity determines that the fifth message is not sent based on interface security protection includes: The third entity determines that the fifth message does not include a header corresponding to the first protocol layer.

Based on the third aspect and the fourth aspect, there may be the following designs:
In a possible design, the third entity sends a ninth message to a network repository function entity, where the ninth message carries configuration information of the third entity, and the configuration information includes first information indicating whether the third entity supports the interface security protection. In the foregoing design, the network repository function entity may obtain an interface security protection capability of the third entity.

In a possible design, if the first information included in the configuration information indicates that the third entity supports the interface security protection, the first information further indicates a network slice that supports the interface security protection and that is in one or more network slices of the third entity. In the foregoing design, the network repository function entity may obtain an interface security protection capability of the network slice of the third entity.

In a possible design, the first information further includes a security protection parameter of the network slice that supports the interface security protection. In the foregoing design, the network repository function entity may obtain the security protection parameter of the network slice of the third entity.

In a possible design, the third entity receives a seventh message sent by the first entity, where the seventh message indicates the third entity to add the header corresponding to the first protocol layer, and the first protocol layer is used to implement the interface security protection; and the third entity performs security and integrity protection on downlink data. In the foregoing design, the first entity may indicate the third entity to activate the interface security protection.

In a possible design, the seventh message carries an Outer Header Creation information element, and the Outer Header Creation information element indicates the third entity to add the header corresponding to the first protocol layer.

In a possible design, that the third entity performs security and integrity protection on downlink data includes: The third entity processes the downlink data at the first protocol layer.

In a possible design, after the third entity receives the seventh message sent by the first entity, the third entity receives an eighth message sent by the first entity, where the eighth message indicates the third entity to remove the header corresponding to the first protocol layer; the third entity receives an uplink data packet, where the uplink data packet includes the header corresponding to the first protocol layer; and the third entity removes the header that corresponds to the first protocol layer and that is included in the uplink data packet. In the foregoing design, the first entity may indicate the third entity to stop the interface security protection.

In a possible design, the eighth message carries an Outer Header Removal information element, and the Outer Header Removal information element indicates the third entity to remove the header corresponding to the first protocol layer.

According to a fifth aspect, an embodiment of this application provides an interface security protection method. The method includes: An access network device receives second information sent by a first entity, where the second information indicates to enable interface security protection. The access network device performs encryption processing on uplink data, and/or performs decryption processing on downlink data. The access network device sends, to a second entity, the uplink data on which encryption processing is performed, and/or sends, to a terminal device, the downlink data on which decryption processing is performed. In the foregoing design, the first entity may indicate the access network device to enable the interface security protection.

In a possible design, the second information carries a Security Indication information element, and the Security Indication indicates to enable the interface security protection.

In a possible design, the second information further carries third information, and the third information is used to determine a security protection parameter. The method further includes: The access network device determines the security protection parameter based on the third information.

In a possible design, the third information may include but is not limited to information such as a quality of service flow identifier (QoS flow identifier, QFI) on which interface security protection needs to be performed, a certificate corresponding to the QFI, a network slice on which interface security protection needs to be performed, and a certificate corresponding to the network slice. In the foregoing design, when determining the security protection parameter based on the third information, the access network device may encrypt and decrypt, based on the third information, a QoS flow (QoS Flow) corresponding to the QFI. Different QFIs or network slices may use different certificates for encryption and decryption. In the foregoing manner, a slice isolation requirement and a differentiated security requirement can be met.

In a possible design, that the access network device performs encryption processing on uplink data, and/or performs decryption processing on downlink data includes: The access network device processes the uplink data and/or the downlink data at a first protocol layer, where the first protocol layer is used to implement the interface security protection.

According to a sixth aspect, this application provides an interface security protection apparatus. The apparatus may be a communication device, or may be a chip or a chip set in the communication device. The apparatus may include a processing unit and a transceiver unit. When the apparatus is the communication device, the processing unit may be a processor, and the transceiver unit may be a transceiver. The apparatus may further include a storage module, and the storage module may be a memory. The storage module is configured to store instructions, and the processing unit executes the instructions stored in the storage module, to enable the communication device to perform a corresponding function in the first aspect, the second aspect, the third aspect, the fourth aspect, or the fifth aspect. When the apparatus is the chip or the chip set in the communication device, the processing unit may be a processor, and the transceiver unit may be an input/output interface, a pin, a circuit, or the like. The processing unit executes instructions stored in a storage module, to enable the communication device to perform a corresponding function in the first aspect, the second aspect, the third aspect, the fourth aspect, or the fifth aspect. The storage module may be a storage module (for example, a register or a cache) in the chip or the chip set, or may be a storage module (for example, a read-only memory or a random access memory) that is in the communication device and that is located outside the chip or the chip set.

According to a seventh aspect, an interface security protection apparatus is provided. The apparatus includes a processor, a communication interface, and a memory. The communication interface is configured to transmit information, and/or a message, and/or data between the apparatus and another apparatus. The memory is configured to store computer-executable instructions, and when the apparatus runs, the processor executes the computer-executable instructions stored in the memory, to enable the apparatus to perform the method in any one of the first aspect or the designs of the first aspect, any one of the second aspect or the designs of the second aspect, any one of the third aspect or the designs of the third aspect, any one of the fourth aspect or the designs of the fourth aspect, or any one of the fifth aspect or the designs of the fifth aspect.

According to an eighth aspect, an embodiment of this application provides a computer storage medium. The computer storage medium stores program instructions. When the program instructions are run on a communication device, the communication device is enabled to perform the method in any one of the first aspect and the possible designs of the first aspect, any one of the second aspect or the designs of the second aspect, any one of the third aspect or the designs of the third aspect, any one of the fourth aspect or the designs of the fourth aspect, or any one of the fifth aspect or the designs of the fifth aspect in embodiments of this application.

According to a ninth aspect, an embodiment of this application provides a computer program product. When the computer program product runs on a communication device, the communication device is enabled to perform the method in any one of the first aspect and the possible designs of the first aspect, any one of the second aspect or the designs of the second aspect, any one of the third aspect or the designs of the third aspect, any one of the fourth aspect or the designs of the fourth aspect, or any one of the fifth aspect or the designs of the fifth aspect in embodiments of this application.

According to a tenth aspect, an embodiment of this application provides a chip. The chip is coupled to a memory, and performs the method in any one of the first aspect and the possible designs of the first aspect, any one of the second aspect or the designs of the second aspect, any one of the third aspect or the designs of the third aspect, any one of the fourth aspect or the designs of the fourth aspect, or any one of the fifth aspect or the designs of the fifth aspect in embodiments of this application.

In addition, for technical effects achieved by the sixth aspect to the tenth aspect, refer to the descriptions in the first aspect. Details are not described herein again.

It should be noted that "coupling" in embodiments of this application indicates a direct combination or an indirect combination of two components.

### BRIEF DESCRIPTION OF DRAWINGS

FIG. 1 is a schematic architectural diagram of a communication system based on a service-based interface in a non-roaming scenario according to an embodiment of this application;
FIG. 2 is a schematic architectural diagram of a communication system based on a reference point in a non-roaming scenario according to an embodiment of this application;
FIG. 3 is a schematic architectural diagram of a communication system based on a service-based interface in a local break-out roaming scenario according to an embodiment of this application;
FIG. 4 is a schematic architectural diagram of a communication system based on a reference point in a local breakout roaming scenario according to an embodiment of this application;
FIG. 5 is a schematic architectural diagram of a communication system based on a reference point in a home routed roaming scenario according to an embodiment of this application;
FIG. 6 is a schematic diagram of an application scenario based on a non-SBA interface according to an embodiment of this application;
FIG. 7 is a flowchart of an interface security protection method according to an embodiment of this application;
FIG. 8 is a schematic diagram of a network slice according to an embodiment of this application;
FIG. 9 is a schematic diagram of registration of an NF with an NRF entity according to an embodiment of this application;
FIG. 10 is a schematic flowchart of registration of an NF with an NRF entity according to an embodiment of this application;
FIG. 11 is a schematic diagram of enabling interface security protection according to an embodiment of this application;
FIG. 12 is a schematic flowchart of selecting a second entity by a first entity according to an embodiment of this application;
FIG. 13 is another schematic flowchart of selecting a second entity by a first entity according to an embodiment of this application;
FIG. 14 is a schematic diagram of a session establishment process according to an embodiment of this application;
FIG. 15 is a schematic diagram of communication between a first entity and a third entity according to an embodiment of this application;
FIG. 16 is a schematic diagram of communication between a first entity and a third entity according to an embodiment of this application;
FIG. 17 is a schematic diagram of communication between a first entity and a third entity according to an embodiment of this application;
FIG. 18 is a schematic structural diagram of an interface security protection apparatus according to an embodiment of this application; and
FIG. 19 is a schematic structural diagram of an interface security protection apparatus according to an embodiment of this application.

### DESCRIPTION OF EMBODIMENTS

To make the purpose, technical solutions, and advantages of embodiments of the present invention clearer, the following clearly and completely describes the technical solutions of embodiments of the present invention with reference to the accompanying drawings in embodiments of the present invention.

Embodiments of this application provide an interface security protection method. The method may be applied to a 5G system (fifth generation mobile communication system), for example, a communication system such as an access network using a new radio access technology (new radio access technology, New RAT) or a cloud radio access network (cloud radio access network, CRAN). The 5G system may be used in a non-roaming scenario, or may be used in a roaming scenario. The 5G system may be used in a service-based architecture, or may be used in an interface-based architecture. This is not specifically limited herein. It should be understood that embodiments of this application may also be applied to future communication (for example, 6G or another network).

A communication system architecture to which the interface security protection method provided in embodiments of this application is applicable may include a network exposure function network element, a policy control function network element, a data management network element, an application function network element, a core network access and mobility management function network element, a session management function network element, a terminal device, an access network device, a user plane function network element, and a data network. The core network access and mobility management function network element may be connected to the terminal device through an N1 interface, the core network access and mobility management function network element may be connected to the access network device through an N2 interface, the access network device may be connected to the user plane function network element through an N3 interface, the session management function network element may be connected to the user plane function network element through an N4 interface, the user plane function network element may be connected to the data network through an N6 interface, and the user plane function network element may be connected to the user plane function network element through an N9 interface. An interface name is merely an example for description. This is not specifically limited in embodiments of this application. The network element in the communication system may be, but is not limited to, a network element in a 5G architecture. The following uses the network element in the 5G architecture as an example to describe functions of each network element in the communication system.

The terminal device may also be referred to as user equipment (user equipment, UE), a mobile station (mobile station, MS), a mobile terminal (mobile terminal, MT), or the like, and is a device that provides voice and/or data connectivity to a user. For example, the terminal device may include a handheld device that has a wireless connection function or a vehicle-mounted device. Currently, the terminal device may be a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The access network device may be an access network (access network, AN), and provides a radio access service for the terminal device. The access network device is a device, in the communication system, that enables the terminal device to access a wireless network. The access network device is a node in the radio access network, and may also be referred to as a base station, or may also be referred to as a radio access network (radio access network, RAN) node (or device). Currently, for example, the access network device is a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP).

For the data network, for example, the data network (data network, DN) may be the Internet (Internet), an IP multimedia service (IP Multi-media Service, IMS) network, or a regional network (namely, a local network, for example, a mobile edge computing (mobile edge computing, MEC) network). The data network includes an application server, and the application server provides a service for the terminal device by transmitting data with the terminal device.

The core network access and mobility management function network element may be configured to manage access control and mobility of the terminal device. During actual application, the core network access and mobility management function network element includes a mobility management function in a mobility management entity (mobility management entity, MME) in a long term evolution (long term evolution, LTE) network framework, and includes an access management function. Specifically, the core network access and mobility management function network element may be responsible for registration of the terminal device, mobility management, a tracking area update procedure, reachability detection, selection of a session management function network element, mobility status transition management, and the like. For example, in 5G, the core network access and mobility management function network element may be a core network access and mobility management function (access and mobility management function, AMF) network element. In future communication, for example, 6G, the core network access and mobility management function network element may still be an AMF network element, or have another name. This is not limited in this application. When the core network access and mobility management function network element is an AMF network element, the AMF may provide an Namf service.

The session management function network element may be responsible for session management (including session establishment, modification, and release) of the terminal device, selection and reselection of a user plane function network element, Internet protocol (internet protocol, IP) address assignment of the terminal device, quality of service (quality of service, QoS) control, and the like. For example, in 5G, the session management function network element may be a session management function (session management function, SMF) network element. In future communication, for example, 6G, the session management function network element may still be an SMF network element or have another name. This is not limited in this application. When the session management function network element is an SMF network element, the SMF may provide an Nsmf service.

The policy control function network element may be responsible for policy control decision making, and providing functions such as service-based data flow and application detection, gating, QoS, and flow-based charging control. For example, in 5G, the policy control function network element may be a policy control function (policy control function, PCF) network element. In future communication, for example, 6G, the policy control function network element may still be a PCF network element or have another name. This is not limited in this application. When the policy control function network element is a PCF network element, the PCF network element may provide an Npcf service.

A main function of the application function network element is interaction with a 3rd Generation Partnership Project (the 3rd Generation Partnership Project, 3GPP) core network to provide a service, to affect service flow routing, access network capability exposure, policy control, and the like. For example, in 5G, the application function network element may be an application function (application function, AF) network element. In future communication, for example, 6G, the application function network element may still be an AF network element or have another name. This is not limited in this application. When the application function network element is an AF network element, the AF network element may provide an Naf service.

The data management network element may be configured to manage subscription data of the terminal device, registration information related to the terminal device, and the like. For example, in 5G, the data management network element may be a unified data management (unified data management, UDM) network element. In future communication, for example, 6G, the data management network element may still be a UDM network element or have another name. This is not limited in this application. When the data management network element is a UDM network element, the UDM network element may provide an Nudm service.

The network exposure function network element may be configured to enable 3GPP to securely provide a network service capability for a third-party AF (for example, a service capability server (Services Capability Server, SCS) or an application server (Application Server, AS)). For example, in 5G, the network exposure function network element may be a network exposure function (network exposure function, NEF). In future communication, for example, 6G, the network exposure function network element may still be an NEF network element or have another name. This is not limited in this application. When the network exposure function network element is an NEF, the NEF may provide an Nnef service for another network function network element.

In addition, the system architecture may further include other network elements, such as a network slice selection function (network slice selection function, NSSF) network element, a network function repository function (NF repository function, NRF) network element, an authentication server function (authentication server function, AUSF) network element, and a service control point (service control point, SCP), which are not listed one by one herein.

Each of the foregoing network elements may also be referred to as a function entity, and may be a network element implemented on dedicated hardware, or may be a software instance run on dedicated hardware, or an instance of a virtualization function on an appropriate platform. For example, the virtualization platform may be a cloud platform.

In addition, in embodiments of this application, an application needs to be associated with at least two sessions, and the association may be transmitting data of the application by using the at least two sessions.

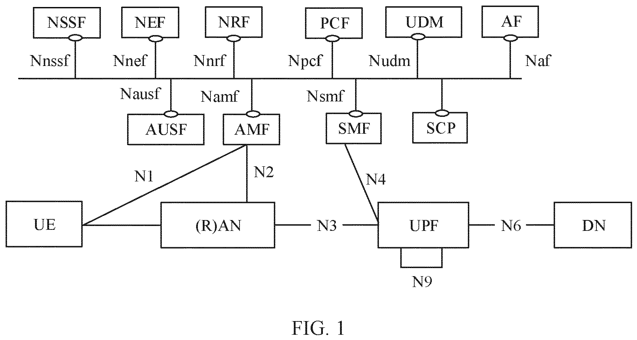

FIG. 1 is an example of a schematic diagram of a possible architecture of a communication system. Namf is a service-based interface exhibited by an AMF. Nsmf is a service-based interface exhibited by an SMF. Nnef is a service-based interface exhibited by an NEF. Npcf is a service-based interface exhibited by a PCF. Nudm is a service-based interface exhibited by a UDM. Naf is a service-based interface exhibited by an AF. Nnrf is a service-based interface exhibited by an NRF. Nausf is a service-based interface exhibited by an AUSF. N1 is an interface between the AMF and UE, N2 is an interface between the AMF and an access network device, N3 is an interface between the access network device and a UPF, N4 is an interface between the SMF and the UPF, N6 is an interface between the UPF and a DN, and N9 is an interface between UPFs.

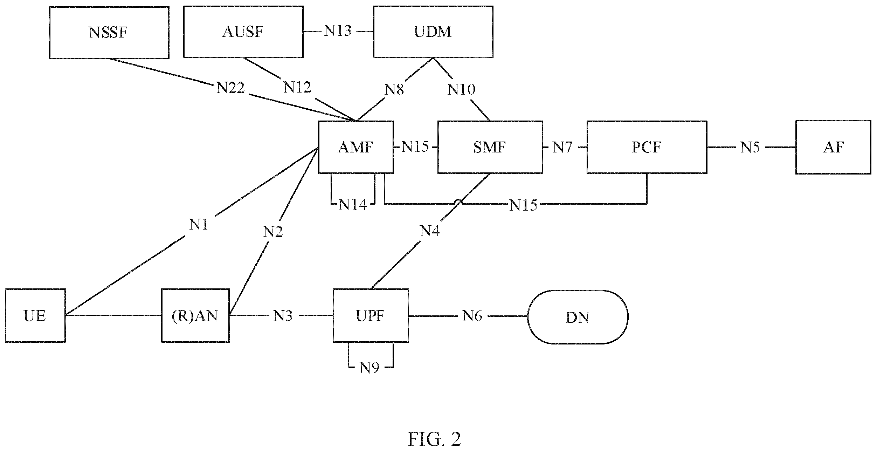

FIG. 2 is an example of a schematic diagram of another possible architecture of a communication system. N5 is an interface between a PCF and an AF. N7 is an interface between an SMF and the PCF. N8 is an interface between a UDM and an AMF. N9 is an interface between two core UPFs. N10 is an interface between the UDM and the SMF. N11 is an interface between the AMF and the SMF. N12 is an interface between the AMF and an AUSF. N14 is an interface between two AMFs. N15 is an interface between the PCF and the AMF. N22 is an interface between an NSSF and the AMF.

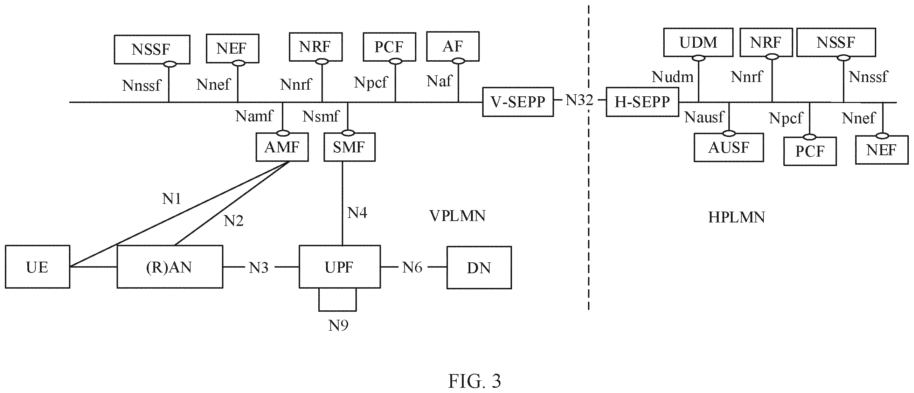

FIG. 3 is an example of a schematic diagram of a possible architecture of a communication system. A security edge protection proxy (security edge protection proxy, SEPP) may be used for topology hiding and used for signaling filtering, policy formulation, and the like of a control plane interface in a public land mobile network (public land mobile network, PLMN). A V-SEPP is a roaming domain SEPP, an H-SEPP is a local domain SEPP, and N32 is an interface between the V-SEPP and the H-SEPP. For Namf, Nsmf, Nnef, Npcf, Nudm, Naf, Nnrf, Nausf, N1, N2, N3, N4, N6, and N9, refer to FIG. 1. Details are not described herein again.

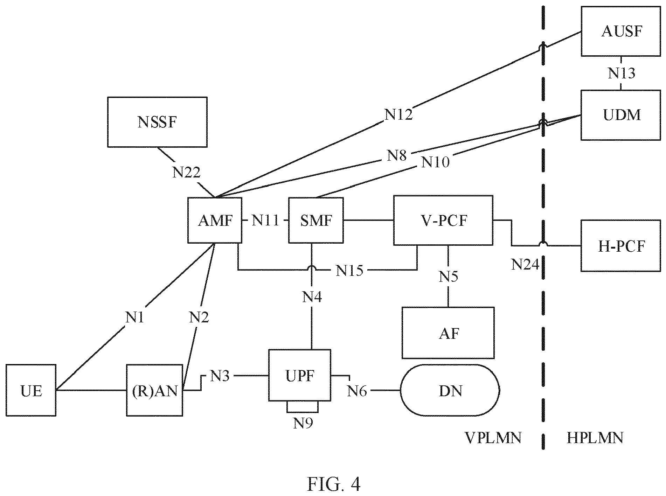

FIG. 4 is an example of a schematic diagram of a possible architecture of a communication system. A V-PCF is a roaming domain PCF, an H-PCF is a local domain PCF, and N24 is a reference point between the V-PCF and the H-PCF. ForN5, N7, N8, N9, N10, N11, N12, N14, N15, and N22, refer to FIG. 2. Details are not described herein again.

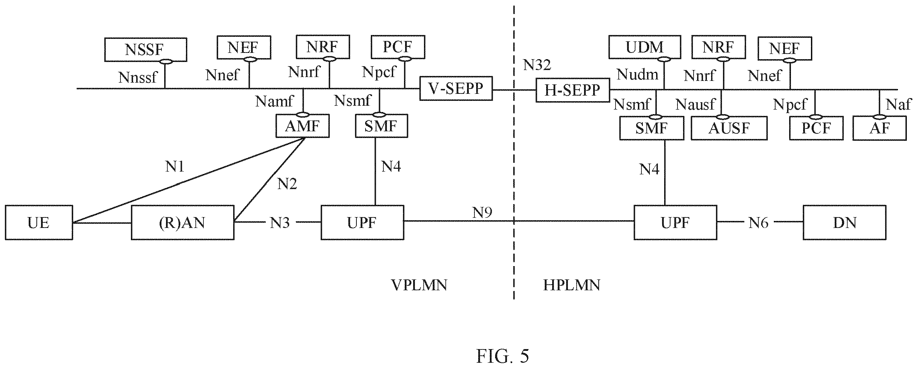

FIG. 5 is an example of a schematic diagram of a possible architecture of a communication system. A V-PCF is a roaming domain PCF, an H-PCF is a local domain PCF, and N24 is a reference point between the V-PCF and the H-PCF. ForN5, N7, N8, N9, N10, N11, N12, N14, N15, and N22, refer to FIG. 2. Details are not described herein again.

It should be understood that embodiments of this application are not limited to the communication systems shown in FIG. 1 to FIG. 5. Names of the network elements shown in FIG. 1 to FIG. 5 are merely used as examples for description herein, and are not intended to limit the network elements included in the communication system architectures to which the method in this application is applicable. In addition, the apparatuses in FIG. 1 to FIG. 5 may be hardware, or may be software obtained through function division, or a structure of a combination thereof.

It should be noted that "a plurality of" means two or more than two in this application. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In addition, it should be understood that although the terms "first", "second", "third", and the like may be used in embodiments of this application to describe various messages, requests, and network elements, these messages, requests, devices, and core network devices should not be limited to these terms. These terms are used only to distinguish between the messages, the requests, and the network elements.

In a 5G communication system architecture, there are SBA interfaces (for example, Nnssf and Nnef interfaces) and non-SBA interfaces (for example, N3, N4, and N9 interfaces) between NFs in a core network and between the core network and an access network.

The SBA interface supports protection of transmitted information security by using HTTPS, and encryption, decryption, integrity protection, and the like may be performed on transmitted data by using TLS.

For protection of the non-SBA interfaces, for example, N3, N4, and N9, security of transmitted information is usually protected by using IPsec and the like. However, when IPsec is used to protect security of interfaces such as N3, N4, and N9, dedicated IPsec hardware is usually required, and IPsec tunnels need to be planned and established in advance. This requirement imposes great restrictions on deployment in 5G MEC scenarios.

First, after a 5G communication system uses an SBA architecture, a homing relationship between an SMF and a UPF is unclear. The SMF and the UPF can discover each other via an NRF. In a full mesh (Full Mesh) scenario, the UPF can even serve any SMF. Consequently, it is difficult to plan and configure an IPsec tunnel in advance.

Second, with the promotion of 5G multi-access edge computing (multi-access edge computing, MEC) scenarios, the SMF/UPF is increasingly migrated to an edge with services, a UPF deployment mode and location are unclear. In addition, during migration to the edge, more constraints need to be considered for UPF deployment, such as cost reduction and a higher security risk. Using dedicated IPsec hardware is costly. How to reduce costs and ensure information security is a technical problem that needs to be resolved.

In view of this, this application provides an interface security protection method and apparatus, to resolve prior-art problems of high costs and poor flexibility of interface security protection based on IPsec. The method and the apparatus are based on a same inventive concept. Because the method and the apparatus have a similar problem-resolving principle, for implementations of the apparatus and the method, refer to each other, and repeated parts are not described in detail again.

The interface security protection method and apparatus provided in embodiments of this application may be applied to a non-SBA interface, for example, an N3, N4, or N9 interface, or may be applied to an SBA interface.

A non-SBA interface is used as an example. An access network device and a UPF that perform communication based on an N3 interface may include a first protocol layer used to implement interface security protection. The first protocol layer may be used to perform encryption and decryption processing, integrity protection, and the like on data. Optionally, the first protocol layer may be an upper protocol layer of a user datagram protocol (user datagram protocol, UDP). During communication, the access network device and the UPF entity may perform encryption and decryption processing and integrity protection on data at the first protocol layer, so that communication security of the N3 interface can be ensured without relying on a dedicated physical or network layer security protocol (for example, IPsec). For example, the first protocol layer may be referred to as a datagram transport layer security (datagram transport layer security, DTLS) protocol layer. It should be understood that, this is merely an example name herein, and a name of the first protocol layer is not specifically limited.

An SMF and the UPF that perform communication based on a N4 interface may also include the foregoing first protocol layer. Optionally, the first protocol layer may be an upper protocol layer of UDP. During communication, the SMF entity and the UPF entity may perform encryption and decryption processing and integrity protection on data at the first protocol layer, so that communication security of the N4 interface can be ensured without relying on a dedicated physical or network layer security protocol (for example, IPsec).

The UPF that performs communication based on an N9 interface may also include the foregoing first protocol layer. Optionally, the first protocol layer may be an upper protocol layer of UDP. During communication, two UPF entities may perform encryption and decryption processing and integrity protection on data at the first protocol layer, so that communication security of the N9 interface can be ensured without relying on a dedicated physical or network layer security protocol (for example, IPsec).

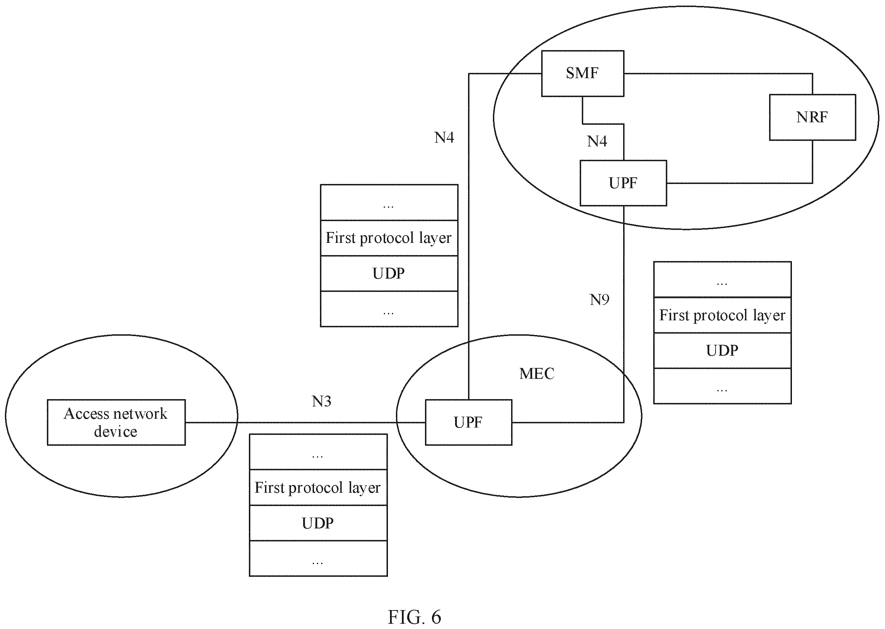

For example, FIG. 6 shows an application scenario based on a non-SBA interface.

The following specifically describes the interface security protection method provided in this application with reference to the accompanying drawings.

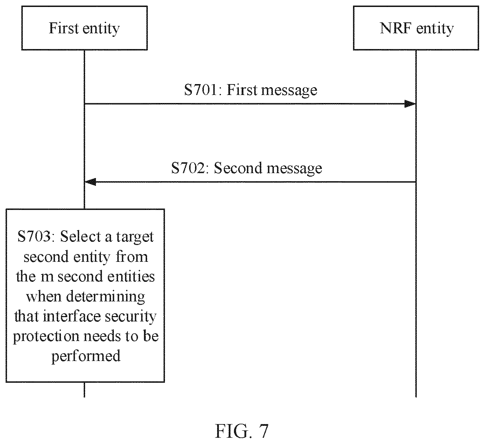

FIG. 7 is a flowchart of an interface security protection method according to this application. Each entity (for example, a first entity, a second entity, or an NRF entity) in embodiments of this application may be a network element, a chip in the network element, a chip set in the network element, or the like. In embodiments of this application, names of elements such as messages and information are merely examples for description, and the names of the elements such as the messages and the information are not limited. The method includes the following steps.

S701: A first entity sends a first message to an NRF entity, where the first message carries a session parameter. Correspondingly, the NRF entity receives the first message from the first entity.

The first message may be used to discover a second entity. For example, the first entity may be an SMF entity, and the second entity is a UPF entity. In other words, the SMF entity may discover the UPF entity by using the first message. For example, the first message may be a discover UPF instance request.

Alternatively, the first entity may be a UPF entity, and the second entity is an SMF entity. In other words, the UPF entity may discover the SMF entity by using the first message.

Alternatively, both the first entity and the second entity may be UPF entities. In other words, a UPF entity may discover another UPF entity by using the first message.

Alternatively, the first entity is an SCP entity, and the second entity is a UPF entity. For example, in an indirect communication (indirect communication) service architecture, the SCP may select a UPF entity by using the method provided in this embodiment of this application.

For example, the session parameter may include but is not limited to at least one of the following parameters: a network slice parameter, a DN parameter, and a session service continuity (session service continuity, SSC) parameter. The network slice parameter may be a network slice type or a network slice name. The DN parameter may be a data network name (data network name, DNN), a DN type, or an access point name. The SSC parameter may be an SSC mode.

S702: The NRF entity sends a second message to the first entity, where the second message carries configuration information corresponding to M second entities that meet the session parameter, m second entities in the M second entities support interface security protection, M is a positive integer, and m is a positive integer not greater than M. Correspondingly, the first entity receives the second message sent by the NRF entity.

For example, configuration information corresponding to the m second entities may include indication information indicating that the interface security protection is supported. Optionally, configuration information of a second entity other than the m second entities may alternatively include indication information indicating that the interface security protection is not supported.

In a possible implementation, if all the second entities support the interface security protection, the configuration information of the second entity may not include indication information indicating whether the interface security protection is supported. Optionally, the configuration information of the second entity may include a security protection parameter of a network slice that supports the interface security protection.

In an example, the first message sent by the first entity may further include a first parameter indicating an interface security protection capability. The second message sent by the NRF entity may carry configuration information of a second entity that meets the session parameter and that supports the interface security protection capability, that is, m is equal to M, and all the M second entities support the interface security protection.

In an example description, if the second entity includes a first protocol layer, it may be understood that the second entity supports the interface security protection; or if the second entity does not include a first protocol layer, it may be understood that the second entity does not support the interface security protection.

In some embodiments, the indication information indicating whether the interface security protection is supported may be indicated at a granularity of an entire NF.

An example is shown in Table 1: SMF#1, UPF#3, and UPF#4 support the interface security protection capability, but SMF#2, UPF#1, and UPF#2 do not support the interface security protection capability.

**Table 1**

| NF instance identifier | Location (locality) | Supported capability (supportedFeatures) |
|---|---|---|
| SMF#1 | Loc# 1 | Supported interface security protection capability (transportProtect) |
| SMF#2 | Loc#2 | |
| UPF#1 | Loc#1 | |
| UPF#2 | Loc#2 | |
| UPF#3 | Loc#3 | transportProtect |
| UPF#4 | Loc#4 | transportProtect |
| ... | ... | ... |

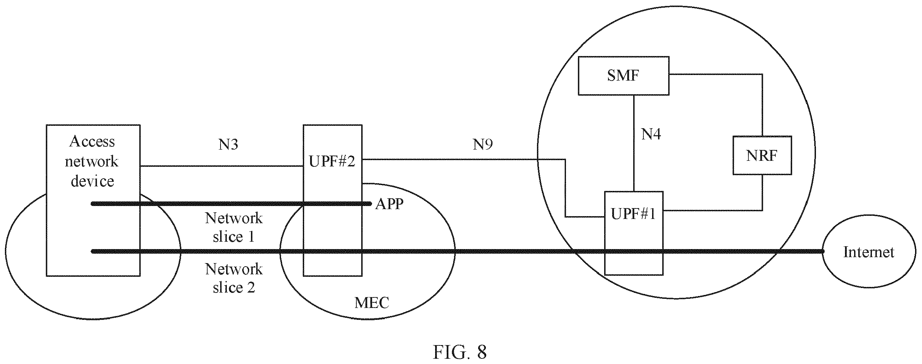

In an MEC application scenario, due to reasons such as limited resources, the UPF supports a plurality of slices at the same time, and each slice also has isolation and differentiated requirements in terms of security. Alternatively, the UPF supports a plurality of DNNs at the same time, and each DNN also has isolation and differentiated requirements in terms of security. For example, as shown in FIG. 8, a network slice 1 and a network slice 2 may use different keys and different encryption and decryption methods.

To support isolation and differentiation of 5G slice security, the configuration information corresponding to the m second entities further includes a network slice that supports the interface security protection and that is in one or more network slices of the second entities corresponding to the configuration information.

Further, the configuration information of the m second entities further includes a security protection parameter of the network slice that supports the interface security protection. The security protection parameter may include a key, a key set, and the like. Therefore, during communication, the first entity and the second entity may perform communication based on a security protection parameter of a network slice of a target second entity, to ensure communication security of N4. Optionally, different security protection parameters may be configured for different network slices.

An example is shown in Table 2: SMF#1, UPF#3, and UPF#4 support the interface security protection capability. SMF#1 supports two slices: sNssai#6 and sNssai#7, sNssai#6 supports the interface security protection capability, sNssai#7 does not support the interface security protection capability, and a security protection parameter of sNssai#6 is para Val# 1. UPF#3 supports two slices: sNssai#1 and sNssai#2, sNssai#1 supports the interface security protection capability, sNssai#2 does not support the interface security protection capability, and a security protection parameter of sNssai#1 is paraVal#2. UPF#4 supports three slices: sNssai#3, sNssai#4, and sNssai#5, sNssai#3, sNssai#4, and sNssai#5 all support the interface security protection capability, a security protection parameter of sNssai#3 is paraUal#3, a security protection parameter of sNssai#4 is paraUal#4, and a security protection parameter of sNssai#5 is paraVal#5. SMF#2, UPF#1, and UPF#2 do not support the interface security protection capability.

**Table 2**

| nfInstanceID | locality | supportedFeatures | Single network slice selection assistance information (single network slice selection assistance information, S-NSSAI) | | |
|---|---|---|---|---|---|
| | | | sNssai | transportProtect | Security protection parameter |
| SMF#1 | Loc#1 | transportProtect | sNssai#6 | Supported (supported) | para Vai# 1 |
| | | | sNssai#7 | Not supported (not supported) | |
| SMF#2 | Loc#2 | | | | |
| UPF#1 | Loc#1 | | | | |
| UPF#2 | Loc#2 | | | | |
| UPF#3 | Loc#3 | transportProtect | sNssai# 1 | Supported | paraUal#2 |
| | | | sNssai#2 | Not supported | |
| UPF#4 | Loc#4 | transportProtect | sNssai#3 | Supported | paraVal#3 |
| | | | sNssai#4 | Supported | paraUal#4 |
| | | | sNssai#5 | Supported | paraVal#5 |
| ... | ... | ... | ... | ... | |

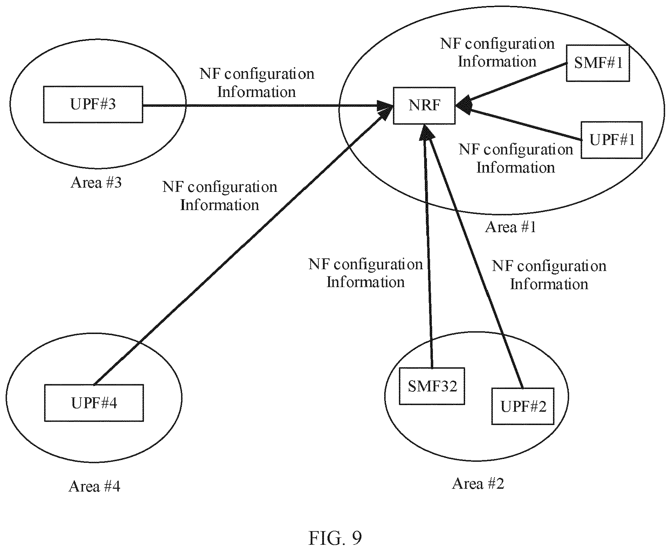

In an implementation, the first entity and the second entity may send NF configuration information (NF profiles) to the NRF entity before step S701. The NF profile may include interface security protection information, for example, indication information indicating whether the security protection is supported, a network slice that supports the interface security protection, and a security protection parameter of the network slice that supports the interface security protection. For example, as shown in FIG. 9, SMF#1, UPF#3, UPF#4, SMF#2, UPF#1, and UPF#2 each send an NF profile to the NRF.

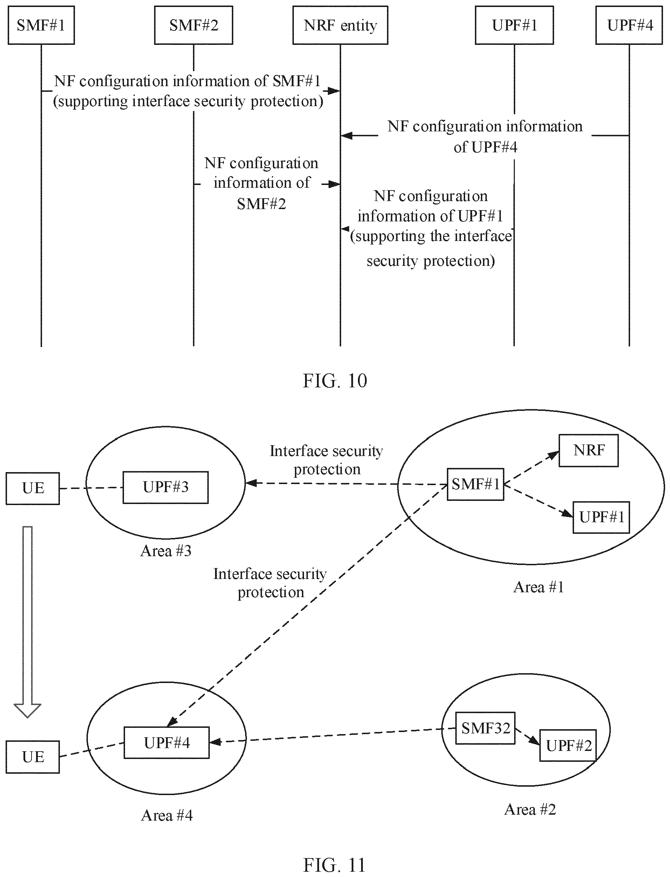

For example, Table 1 and Table 2 are used as examples. Processes in which SMF#1, UPF#4, SMF#2, and UPF#1 register with the NRF entity may be shown in FIG. 10. It should be noted that the processes in which the entities register with the NRF entity are independent of each other, and there is no sequence.

S703: The first entity selects a target second entity from the m second entities when determining that interface security protection needs to be performed.

According to the foregoing technical solution, in this embodiment of this application, when determining that interface security protection needs to be performed, the first entity may select, from the m second entities, a second entity having a same interface security protection capability as the first entity as the target second entity, so that two entities that perform communication have a same interface security protection capability. During communication, the two entities may perform interface security protection (for example, encryption and decryption and integrity protection) on transmitted data. According to the method provided in this embodiment of this application, interface security no longer needs to be ensured by relying on a dedicated physical or network layer security protocol (for example, IPsec), so that MEC deployment costs can be reduced.

In an example, the first entity may select, for the N4 interface, at least one second entity from the m second entities as the target second entity. In the foregoing manner, communication security of the N4 interface can be ensured by selecting the second entity that supports the interface security protection.

In another example, the first entity may select, for an N9 interface, at least one second entity from the m second entities as the target second entity. In the foregoing manner, communication security of the N9 interface can be ensured by selecting the second entity that supports the interface security protection.

In still another example, the first entity may select, for an N3 interface, at least one second entity from the m second entities as the target second entity. In the foregoing manner, communication security of the N3 interface can be ensured by selecting the second entity that supports the interface security protection.

In a possible implementation, when selecting the target second entity, the first entity may select different second entities as target second entities for different interfaces.

In some embodiments, if the configuration information corresponding to the m second entities further includes the network slice that supports the interface security protection and that is in the one or more network slices of the second entities corresponding to the configuration information, when selecting the target second entity from the m second entities, the first entity may determine X second entities based on the configuration information corresponding to the m second entities, and then may select at least one second entity from the X second entities as the target second entity, where each of the X second entities has at least one network slice that supports the interface security protection, and X is a positive integer not greater than m. In the foregoing manner, the first entity may preferentially select a second entity of a network slice that supports the interface security protection as the target second entity.

In an implementation, the first entity may determine, based on at least one of the following attributes, that interface security protection needs to be performed: a geographical location of the second entity, an attribute of a network slice in a network, and a multi-access edge computing scenario.

To improve user plane transmission efficiency and reduce a delay, when selecting and reselecting a second entity, the first entity needs to focus on a deployment scenario of the second entity, for example, centralized deployment or distributed deployment of the second entity and proximity of the second entity to an access network (for example, MEC). A deployment location of a network element is closely related to a security environment. For example, in an MEC scenario, the second entity is vulnerable to an attack at an edge, and the interface security protection may be enabled. With continuous movement of a user and reselection of a second entity, a security environment of a service is still constantly changing. The first entity needs to select an appropriate second entity based on a change of the security environment and a capability of the second entity, as shown in FIG. 11.

Using the geographical location of the second entity and the attribute of the network slice in the network as an example, whether interface security protection needs to be performed between two entities may be shown in Table 3.

**Table 3**

| Locality | Locality | Slice | TransportProtect |
|---|---|---|---|
| Loc#1 | Loc#1 | Default | No |
| Loc#1 | Loc#3 | sNssai#1 | Yes |
| Loc#1 | Loc#3 | sNssai#2 | No |
| Loc#1 | Loc#4 | All | Yes |

As shown in Table 3, when a user initiates an sNssai#1 slice service, the interface security protection needs to be enabled between network elements at Loc#1 and Loc#3.

Using the MEC application scenario as an example, whether interface security protection needs to be performed between two entities may be shown in Table 4.

**Table 4**

| Locality | Data network access identifier (DN access identifier, DNAI) | TransportProtect |
|---|---|---|
| Loc#3 | dnai#1 | Yes |
| Loc#4 | All | Yes |

The DNAI is an identifier of a connection for accessing a DN at a user layer when an application is accessed.

As shown in Table 4, the interface security protection is enabled for dnai#1 at Loc#3, and the interface security protection is enabled for each dnai at Loc#4.

To better understand the method provided in this embodiment of this application, the following describes a process in which the first entity selects the second entity by using an example in which the first entity is the SMF entity and the second entity is the UPF entity.

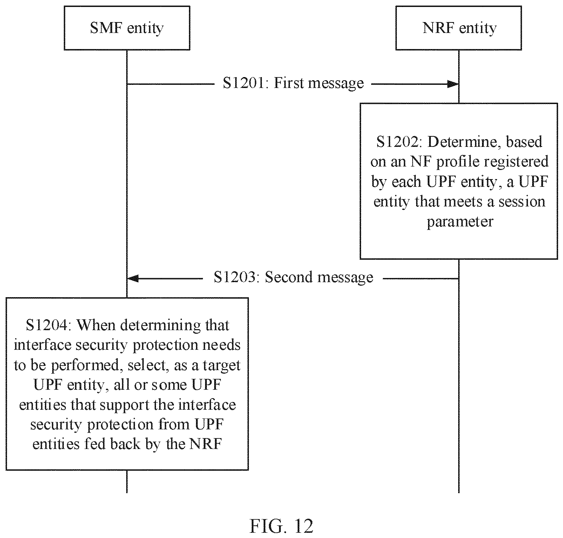

Example 1: As shown in FIG. 12, a process in which the SMF entity selects the UPF entity may include the following steps.

S1201: The SMF entity sends a first message to the NRF entity, where the first message is used to discover the UPF entity.

For example, the first message may be a discover UPF instance request, and the first message may carry session parameters such as a DNN and S-NSSAI.

S1202: The NRF entity determines, based on an NF profile registered by each UPF entity, a UPF entity that meets the session parameter.

For a process in which each UPF entity registers with the NRF, refer to FIG. 11. Details are not described herein.

S1203: The NRF entity sends a second message to the SMF entity, where the second message carries information about the UPF entity that meets the session parameter.

For example, the second message may carry an NF profile of the UPF entity that meets the session parameter.

For example, the NRF entity may determine that UPF#1, UPF#2, and UPF#3 meet the session parameter, where UPF#2 and UPF#3 support interface security protection, and UPF#1 does not support the interface security protection.

Optionally, an NF profile registered by UPF#2 may include indication information indicating that UPF #2 supports the interface security protection. An NF profile registered by UPF#3 may include indication information indicating that UPF#3 supports the interface security protection.

An NF profile registered by UPF#1 may include indication information indicating that UPF#1 does not support the interface security protection.

S1204: When determining that interface security protection needs to be performed, the SMF entity selects, as a target UPF entity, all or some UPF entities that support the interface security protection from UPF entities fed back by the NRF.

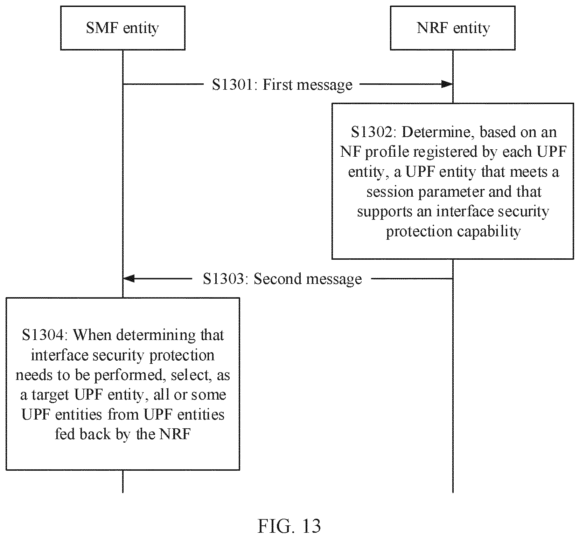

Example 2: As shown in FIG. 13, a process in which the SMF entity selects the UPF entity may include the following steps.

S1301: The SMF entity sends a first message to the NRF entity, where the first message is used to discover the UPF entity.

For example, the first message may be a discover UPF instance request, the first message may carry session parameters such as a DNN and S-NSSAI, and the first message carries a parameter indicating an interface security protection capability.

S1302: The NRF determines, based on an NF profile registered by each UPF entity, a UPF entity that meets the session parameter and that supports the interface security protection capability.

For a process in which each UPF entity registers with the NRF, refer to FIG. 11. Details are not described herein.

S1303: The NRF entity sends a second message to the SMF entity, where the second message carries information about the UPF entity that meets the session parameter and that supports interface security protection.

For example, the second message may carry an NF profile of the UPF entity that meets the session parameter and that supports the interface security protection.

For example, the NRF entity may determine that UPF#2 and UPF#3 meet the session parameter and support the interface security protection.

Optionally, an NF profile registered by UPF#2 may include indication information indicating that UPF #2 supports the interface security protection. An NF profile registered by UPF#3 may include indication information indicating that UPF#3 supports the interface security protection.

S1304: When determining that interface security protection needs to be performed, the SMF entity selects, as a target UPF entity, all or some UPF entities from UPF entities fed back by the NRF.

In a possible implementation, after determining the target second entity, the first entity may indicate a third entity in the target second entity to activate the interface security protection. For example, the first entity may send a seventh message to the third entity, where the seventh message indicates the third entity to add a header corresponding to the first protocol layer.

Correspondingly, after receiving the seventh message, the third entity may perform security and integrity protection on downlink data. For example, the third entity may process the downlink data at the first protocol layer.

The third entity may be any second entity in the target second entity. It should be understood that, the first entity may further send a third message to another second entity in the target second entity. Herein, only the third entity is used as an example for description.

For example, the seventh message may carry an outer header creation (Outer Header Creation) information element, and the Outer Header Creation information element indicates the third entity to add the header corresponding to the first protocol layer.

In an implementation, for example, a second protocol layer is a PFCP layer. An Outer Header Creation information element of the PFCP layer may be extended. For example, an Outer Header Creation Description may include a status value indicating to create the header corresponding to the first protocol layer, for example, GTP-U/DTLS/UDP/IPv4 or GTP-U/DTLS/UDP/IPv6. The status value may indicate the third entity to create the header corresponding to the first protocol layer.

For example, the seventh message may be an N4 session establishment request (N4 Session Establishment Request) message, the N4 session establishment request message carries an Outer Header Creation information element, and the information element may be GTP-U/DTLS/UDP/IPv4 or GTP-U/DTLS/UDP/IPv6.

In addition, the first entity may further indicate the third entity to stop the interface security protection.

For example, the first entity may send an eighth message to the third entity, where the eighth message indicates the third entity to remove the header corresponding to the first protocol layer.

Correspondingly, after receiving the eighth message and after receiving an uplink data packet, the third entity removes the header that corresponds to the first protocol layer and that is included in the uplink data packet.

For example, the eighth message carries an outer header removal (Outer Header Removal) information element, and the Outer Header Removal information element indicates the third entity to remove the header corresponding to the first protocol layer.

In an implementation, for example, a second protocol layer is PFCP. An Outer Header Removal information element of PFCP may be extended. For example, an Outer Header Removal Description may include a status value indicating to remove the header corresponding to the first protocol layer, for example, GTP-U/DTLS/UDP/IPv4 or GTP-U/DTLS/UDP/IPv6. The status value may indicate the third entity to create the header corresponding to the first protocol layer.

For example, the eighth message may be an N4 session establishment request (N4 Session Establishment Request) message, the N4 Session Establishment Request message carries an Outer Header Removal information element, and the information element may be GTP-U/DTLS/UDP/IPv4 or GTP-U/DTLS/UDP/IPv6.

In a possible implementation, the first entity may further indicate an access network device to activate the interface security protection. For example, the first entity sends second information to the access network device, where the second information indicates to enable the interface security protection.

In an implementation, the first entity may send the second information to the access network device via an AMF entity.

Correspondingly, after receiving the second information, the access network device performs encryption processing on uplink data and sends the uplink data to the third entity, and/or performs decryption processing on downlink data and sends, to the terminal device, the downlink data on which decryption processing is performed. For example, the access network device may process the uplink data and/or the downlink data at the first protocol layer.

For example, the second information carries a security indication (Security Indication) information element, and the Security Indication indicates to enable the interface security protection.

In an implementation, the Security Indication information element may be extended. For example, the Security Indication may include a field for indicating to enable the interface security protection, for example, an NG-U UP Confidentiality Protection Indication field. The field may indicate the access network device to enable the interface security protection.

Optionally, the second information may further carry third information, and the third information is used to determine the security protection parameter. The access network device may determine the security protection parameter based on the third information.

For example, the third information may include but is not limited to information such as a quality of service flow identifier (QoS flow identifier, QFI) on which interface security protection needs to be performed, a certificate corresponding to the QFI, a network slice on which interface security protection needs to be performed, and a certificate corresponding to the network slice. When determining the security protection parameter based on the third information, the access network device may encrypt and decrypt, based on the third information, a QoS flow corresponding to the QFI. Different QFIs or network slices may use different certificates for encryption and decryption. In the foregoing manner, a slice isolation requirement and a differentiated security requirement can be met.

For example, the second information may be N2 SM information (N2 SM information), the N2 SM information carries a Security Indication information element, and the information element includes an NG-U UP Confidentiality Protection Indication field.

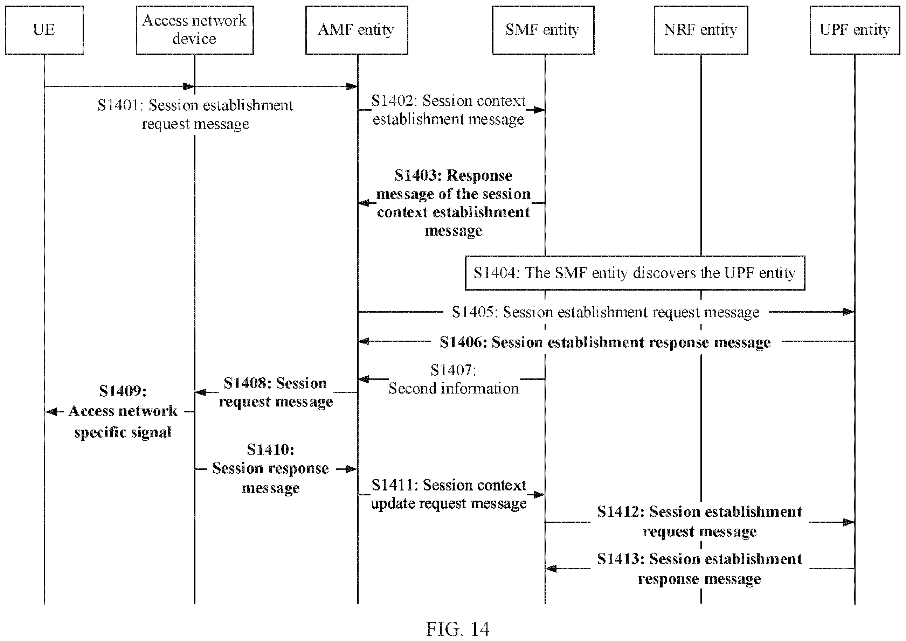

To better understand the solutions provided in this application, the following describes, with reference to a session establishment process, a process in which a first entity indicates a second entity and an access network device to activate/stop interface security protection by using an example in which the first entity is an SMF and the second entity is a UPF. As shown in FIG. 14, the session establishment process includes the following steps.

S1401: UE sends a session establishment request message to an AMF entity via the access network device.

For example, the session establishment request message may be a PDU session establishment request message.

S1402: The AMF entity sends a session context establishment message to the SMF entity.

For example, the session context establishment message may be an Nsmf PDUSession CreateSMContext message.

S1403: The SMF entity sends a response message of the session context establishment message to the AMF entity.

S1404: The SMF entity discovers the UPF entity.

S1405: The SMF entity sends a session establishment request message to the UPF entity, where the session establishment request message carries an Outer Header Creation/Removal information element.

For example, the session establishment request message may be an N4 session establishment request message.

S1406: The UPF entity sends a session establishment response message to the SMF entity.

For example, the session establishment response message may be an N4 session establishment response message.

S1407: The SMF entity sends second information to the AMF entity, where the second information includes a field for indicating to enable the interface security protection.

S1408: The AMF entity sends a session request message to the access network device, where the session request message carries the second information.

For example, the session request message may be an N2 PDU session request message.

S1409: The access network device sends an access network special signal (AN specific signalling) to the UE.

S1410: The access network device sends a session response message to the AMF entity.

For example, the session response message may be an N2 PDU session response message.

S1411: The AMF entity sends a session context update request message to the SMF entity.

For example, the session context update request message may be an Nsmf_PDUSession UpdateSMContext Request message.

S1412: The SMF entity sends a session establishment request message to the UPF entity, where the session establishment request message carries an Outer Header Creation/Removal information element.

For example, the session establishment request message may be an N4 session establishment request message.

S1413: The UPF entity sends a session establishment response message to the SMF entity.

For example, the session establishment response message may be an N4 session establishment response message.

Optionally, after selecting the target second entity, the first entity may communicate with a third entity in the target second entity.

In some embodiments, that the first entity communicates with a third entity includes: The first entity performs a handshake at a first protocol layer with the third entity in the target second entity, where the first protocol layer is used to implement the interface security protection. For example, the first protocol layer may implement functions such as encryption and decryption processing and integrity protection on data. The first entity establishes a connection at a second protocol layer to the third entity. The second protocol layer is used to implement data packet forwarding control. For example, the second protocol layer may be a data packet forwarding (packet forwarding control protocol, PFCP) layer.

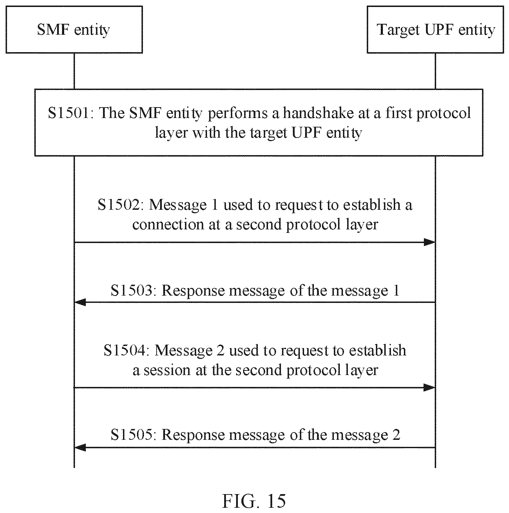

For example, a process in which the first entity communicates with the third entity is described by using an example in which the first entity is the SMF entity and the third entity is the UPF entity. As shown in FIG. 15, a process in which the SMF entity communicates with a target UPF entity may include the following steps.

S1501: The SMF entity performs a handshake at a first protocol layer with the target UPF entity.

S1502: The SMF entity sends, to the target UPF entity, a message 1 used to request to establish a connection at a second protocol layer, for example, a PFCP association request (PFCP association Request) message.

S1503: The target UPF entity sends a response message of the message 1 to the SMF entity, for example, a PFCP association response (PFCP association Response) message.

S1504: The SMF entity sends, to the target UPF entity, a message 2 used to request to establish a session at the second protocol layer, for example, a PFCP session establishment request (PFCP Session Establishment Request) message.

S1505: The target UPF entity sends a response message of the message 2 to the SMF entity, for example, a PFCP session establishment response (PFCP Session Establishment Response) message.

In some other embodiments, that the first entity communicates with the third entity includes: The first entity sends a third message to the third entity, where the third message is used to request to establish a connection at a second protocol layer. If the connection at the second protocol layer requires security protection, when determining that the third message is not sent based on the interface security protection, the third entity sends, to the first entity, a rejection message corresponding to the third message. The first entity performs a handshake at a first protocol layer with the third entity. The first entity sends a fourth message to the third entity, where the fourth message is used to request to establish the connection at the second protocol layer. The third entity sends, to the first entity, a response message corresponding to the fourth message.

Optionally, the rejection message corresponding to the third message may carry a rejection cause, and a value of the rejection cause is a cause value indicating that no interface security protection is performed on the third message. For example, the rejection cause may be "Unauthorized, Request must send to the first protocol layer".

In an implementation, the third entity may determine, depending on whether the third message includes a header corresponding to the first protocol layer, that the third message is not sent based on the interface security protection. If the third message includes the header corresponding to the first protocol layer, the third message is sent based on the interface security protection; otherwise, the third message is not sent based on the interface security protection.

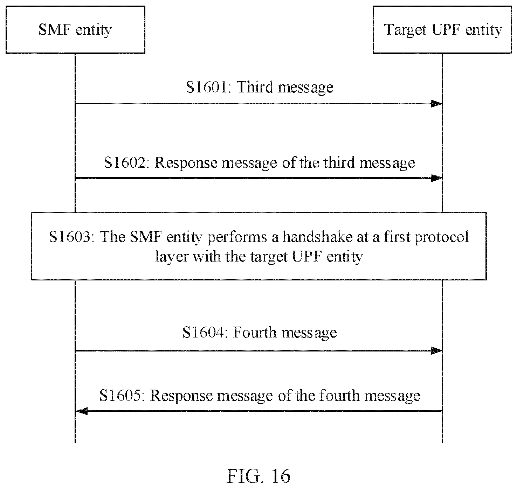

For example, a process in which the first entity communicates with the third entity is described by using an example in which the first entity is the SMF entity and the third entity is the UPF entity. As shown in FIG. 16, a process in which the SMF entity communicates with a target UPF entity may include the following steps.

S1601: The SMF entity sends a third message to the target UPF entity.

For example, the second protocol layer may be a PFCP layer, and the third message may be a PFCP association setup request message.

S1602: When a connection at a second protocol layer requires security protection and the third message is not sent based on the interface security protection, the target UPF entity sends a rejection message of the third message to the SMF entity.

S1603: The SMF entity performs a handshake at a first protocol layer with the target UPF entity.

S1604: The SMF entity sends a fourth message to the target UPF entity, where the fourth message is used to request to establish the connection at the second protocol layer.

The fourth message may include a header corresponding to the first protocol layer.

For example, the fourth message may be a PFCP association setup request message.

S1605: The target UPF entity sends, to the SMF entity, a response message corresponding to the fourth message.

In some other embodiments, that the first entity communicates with the third entity includes: The first entity establishes a connection at a second protocol layer to the third entity in the target second entity; and the first entity sends a fifth message to the third entity, where the fifth message is used to request to establish a session at the second protocol layer. If the session at the second protocol layer requires security protection, when determining that the fifth message is not sent based on the interface security protection, the third entity sends, to the first entity, a rejection message corresponding to the fifth message. The first entity performs a handshake at a first protocol layer with the third entity. The first entity sends a sixth message to the third entity, where the sixth message is used to request to establish the session at the second protocol layer. The third entity sends, to the first entity, a response message corresponding to the sixth message.

Optionally, the rejection message corresponding to the fifth message may carry a rejection cause, and a value of the rejection cause is a cause value indicating that no interface security protection is performed on the fifth message. For example, the rejection cause may be "Unauthorized, Request must send to the first protocol layer".

In an implementation, the third entity may determine, depending on whether the fifth message includes a header corresponding to the first protocol layer, that the fifth message is not sent based on the interface security protection. If the fifth message includes the header corresponding to the first protocol layer, the fifth message is sent based on the interface security protection; otherwise, the fifth message is not sent based on the interface security protection.

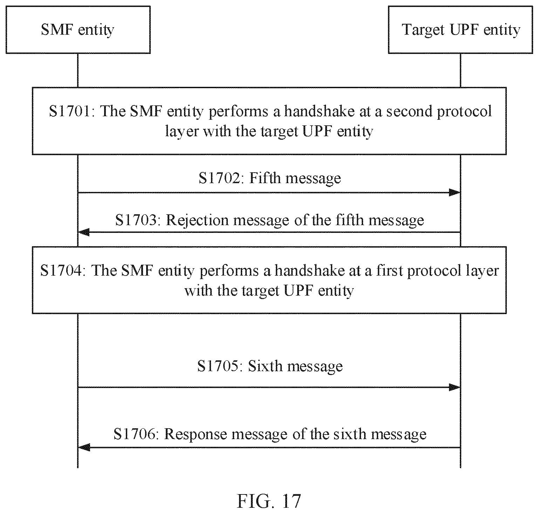

For example, a process in which the first entity communicates with the third entity is described by using an example in which the first entity is the SMF entity and the third entity is the UPF entity. As shown in FIG. 17, a process in which the SMF entity communicates with a target UPF entity may include the following steps.

S1701: The SMF entity establishes a connection at a second protocol layer to the target UPF entity.

S1702: The SMF entity sends a fifth message to the target UPF entity.

For example, the second protocol layer may be a PFCP layer, and the fifth message may be a PFCP session establishment request message.

S1703: When a session at the second protocol layer requires security protection and the fifth message is not sent based on the interface security protection, the target UPF entity sends a rejection message of the fifth message to the SMF entity.

S1704: The SMF entity performs a handshake at a first protocol layer with the target UPF entity.

S1705: The SMF entity sends a sixth message to the target UPF entity, where the sixth message is used to request to establish the session at the second protocol layer.

The sixth message may include a header corresponding to the first protocol layer.

For example, the sixth message may be a PFCP session establishment request message.

S1706: The target UPF entity sends, to the SMF entity, a response message corresponding to the sixth message.

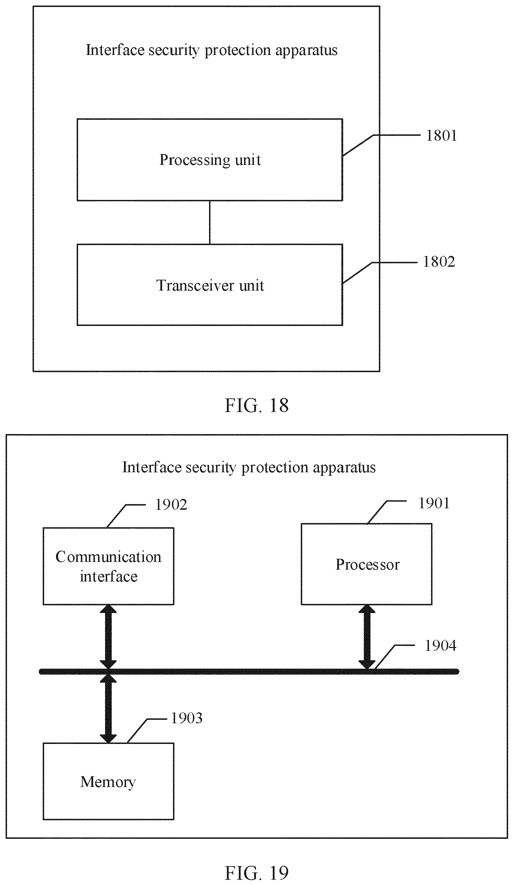

Based on a same inventive concept as the method embodiments, an embodiment of this application provides an interface security protection apparatus. A structure of the interface security protection apparatus may be shown in FIG. 18, and includes a processing unit 1801 and a transceiver unit 1802.

In an implementation, the interface security protection apparatus may be specifically configured to implement the methods performed by the first entity in the embodiments in FIG. 7 to FIG. 19. The apparatus may be the first entity, or may be a chip, a chip set, or a part of the chip in the first entity that is configured to perform a related method function. The transceiver unit 1802 is configured to: send a first message to a network repository function entity, where the first message carries a session parameter; and receive a second message sent by the network repository function entity, where the second message carries configuration information corresponding to M second entities that meet the session parameter, m second entities in the M second entities support interface security protection, M is a positive integer, and m is a positive integer not greater than M. The processing unit 1801 is configured to: when determining that interface security protection needs to be performed, select a target second entity from the m second entities.

For example, the first message further includes a first parameter indicating an interface security protection capability; and m is equal to M.

Optionally, configuration information corresponding to the m second entities further includes a network slice that supports the interface security protection and that is in one or more network slices of the second entities corresponding to the configuration information.

The processing unit 1801 may be specifically configured to: when selecting the target second entity from the m second entities, determine X second entities based on the configuration information corresponding to the m second entities, and select at least one second entity from the X second entities as the target second entity, where each of the X second entities has at least one network slice that supports the interface security protection, and X is a positive integer not greater than m.

For example, the configuration information of the m second entities further includes a security protection parameter of the network slice that supports the interface security protection.

In an example, the processing unit 1801 is further configured to: after selecting the target second entity from the m second entities, perform a handshake at a first protocol layer with a third entity in the target second entity by using the transceiver unit 1802, where the first protocol layer is used to implement the interface security protection; and establish a connection at a second protocol layer to the third entity by using the transceiver unit 1802, where the second protocol layer is used to implement data packet forwarding control.

In another example, the processing unit 1801 is further configured to: after the first entity selects the target second entity from the m second entities, send a third message to a third entity in the target second entity by using the transceiver unit 1802, where the third message is used to request to establish a connection at a second protocol layer, and the second protocol layer is used to implement data packet forwarding control; receive, from the third entity by using the transceiver unit 1802, a rejection message corresponding to the third message; perform a handshake at a first protocol layer with the third entity by using the transceiver unit 1802, where the first protocol layer is used to implement the interface security protection; send a fourth message to the third entity by using the transceiver unit 1802, where the fourth message is used to request to establish the connection at the second protocol layer; and receive, from the target second entity by using the transceiver unit 1802, a response message corresponding to the fourth message.

In still another example, the processing unit 1801 is further configured to: after the first entity selects the target second entity from the m second entities, establish a connection at a second protocol layer to a third entity in the target second entity by using the transceiver unit 1802, where the second protocol layer is used to implement data packet forwarding control; send a fifth message to the third entity by using the transceiver unit 1802, where the fifth message is used to request to establish a session at the second protocol layer; receive, from the third entity by using the transceiver unit 1802, a rejection message corresponding to the fifth message; perform a handshake at a first protocol layer with the third entity by using the transceiver unit 1802, where the first protocol layer is used to implement the interface security protection; send a sixth message to the third entity by using the transceiver unit 1802, where the sixth message is used to request to establish the session at the second protocol layer; and receive, from the third entity by using the transceiver unit 1802, a response message corresponding to the sixth message.

Optionally, the processing unit 1801 may be specifically configured to: when determining that interface security protection needs to be performed, determine, based on at least one of the following attributes, that interface security protection needs to be performed: a geographical location of the second entity, an attribute of a network slice in a network, and a multi-access edge computing scenario.

The transceiver unit 1802 may be further configured to: after the processing unit 1801 selects the target second entity from the m second entities, send a seventh message to the third entity in the target second entity, where the seventh message indicates the third entity to add a header corresponding to the first protocol layer, and the first protocol layer is used to implement the interface security protection.

For example, the seventh message carries an Outer Header Creation information element, and the Outer Header Creation information element indicates the third entity to add the header corresponding to the first protocol layer.

The transceiver unit 1802 may be further configured to: after sending the seventh message to the third entity in the target second entity, send an eighth message to the third entity, where the eighth message indicates the third entity to remove the header corresponding to the first protocol layer.

For example, the eighth message carries an Outer Header Removal information element, and the Outer Header Removal information element indicates the third entity to remove the header corresponding to the first protocol layer.

The transceiver unit 1802 may be further configured to: after the processing unit 1801 selects the target second entity from the m second entities, send second information to an access network device, where the second information indicates to enable the interface security protection.

For example, the second information carries a security indication Security Indication information element, and the Security Indication indicates to enable the interface security protection.

Optionally, the second information further carries third information, and the third information is used to determine the security protection parameter.

In another implementation, the interface security protection apparatus may be specifically configured to implement the methods performed by the network repository function entity in the embodiments in FIG. 7 to FIG. 19. The apparatus may be the network repository function entity, or may be a chip, a chip set, or a part of the chip in the network repository function entity that is configured to perform a related method function. The transceiver unit 1802 is configured to receive a first message sent by a first entity, where the first message carries a session parameter. The processing unit 1801 is configured to select M second entities based on the session parameter, where M is a positive integer. The transceiver unit 1802 is further configured to send a second message to the first entity, where the second message carries configuration information corresponding to the M second entities that meet the session parameter, m second entities in the M second entities support interface security protection, M is a positive integer, and m is a positive integer not greater than M.

For example, the first message further includes a first parameter indicating an interface security protection capability. The processing unit 1801 is specifically configured to: when selecting the M second entities based on the session parameter, determine the M second entities that meet the session parameter and that support the interface security protection capability, where m is equal to M.

Optionally, configuration information corresponding to the m second entities further includes a network slice that supports the interface security protection and that is in one or more network slices of the second entities corresponding to the configuration information.

Optionally, the configuration information of the m second entities further includes a security protection parameter of the network slice that supports the interface security protection.

In still another implementation, the interface security protection apparatus may be specifically configured to implement the methods performed by the third entity in the embodiments in FIG. 7 to FIG. 19. The apparatus may be the third entity, or may be a chip, a chip set, or a part of the chip in the third entity that is configured to perform a related method function. The transceiver unit 1802 is configured to communicate with a first entity. The processing unit 1801 is configured to receive, by using the transceiver unit 1802, a third message sent by the first entity, where the third message is used to request to establish a connection at a second protocol layer, and the second protocol layer is used to implement data packet forwarding control; if the connection at the second protocol layer requires security protection, when determining that the third message is not sent based on interface security protection, send, to the first entity by using the transceiver unit 1802, a rejection message corresponding to the third message; perform a handshake at a first protocol layer with the first entity by using the transceiver unit 1802, where the first protocol layer is used to implement the interface security protection; receive, by using the transceiver unit 1802, a fourth message sent by the first entity, where the fourth message is used to request to establish the connection at a second protocol layer; and send, to the first entity by using the transceiver unit 1802, a response message corresponding to the fourth message.

Optionally, the processing unit 1801 is specifically configured to: when determining that the third message is not sent based on the interface security protection, determine that the third message does not include a header corresponding to the first protocol layer.

For example, the transceiver unit 1802 is further configured to send a ninth message to a network repository function entity, where the ninth message carries configuration information of the third entity, and the configuration information includes first information indicating whether the third entity supports the interface security protection.

Optionally, if the first information included in the configuration information indicates that the third entity supports the interface security protection, the first information further indicates a network slice that supports the interface security protection and that is in one or more network slices of the third entity.

For example, the first information further includes a security protection parameter of the network slice that supports the interface security protection.

The processing unit 1801 may be further configured to: receive, by using the transceiver unit 1802, a seventh message sent by the first entity, where the seventh message indicates the third entity to add the header corresponding to the first protocol layer, and the first protocol layer is used to implement the interface security protection; and perform security and integrity protection on downlink data.

For example, the seventh message carries an Outer Header Creation information element, and the Outer Header Creation information element indicates the third entity to add the header corresponding to the first protocol layer.

Optionally, the processing unit 1801 is specifically configured to: when performing security and integrity protection on the downlink data, process the downlink data at the first protocol layer.

The processing unit 1801 is further configured to: after receiving, by using the transceiver unit 1802, the seventh message sent by the first entity, receive, by using the transceiver unit 1802, an eighth message sent by the first entity, where the eighth message indicates the third entity to remove the header corresponding to the first protocol layer; receive an uplink data packet by using the transceiver unit 1802, where the uplink data packet includes the header corresponding to the first protocol layer; and remove the header that corresponds to the first protocol layer and that is included in the uplink data packet.

For example, the eighth message carries an Outer Header Removal information element, and the Outer Header Removal information element indicates the third entity to remove the header corresponding to the first protocol layer.

In yet another implementation, the interface security protection apparatus may be specifically configured to implement the methods performed by the third entity in the embodiments in FIG. 7 to FIG. 19. The apparatus may be the third entity, or may be a chip, a chip set, or a part of the chip in the third entity that is configured to perform a related method function. The transceiver unit 1802 is configured to communicate with a first entity. The processing unit 1801 is configured to: establish a connection at a second protocol layer to the first entity by using the transceiver unit 1802, where the second protocol layer is used to implement data packet forwarding control; receive, by using the transceiver unit 1802, a fifth message sent by the first entity, where the fifth message is used to request to establish a session at the second protocol layer; if the second protocol layer session requires security protection, when determining that the fifth message is not sent based on interface security protection, send, to the first entity by using the transceiver unit 1802, a rejection message corresponding to the fifth message; perform a handshake at a first protocol layer with the first entity by using the transceiver unit 1802, where the first protocol layer is used to implement the interface security protection; receive, by using the transceiver unit 1802, a sixth message sent by the first entity, where the sixth message is used to request to establish the session at the second protocol layer; and send, to the first entity by using the transceiver unit 1802, a response message corresponding to the sixth message.

Optionally, the processing unit 1801 is specifically configured to: when determining that the fifth message is not sent based on the interface security protection, determine that the fifth message does not include a header corresponding to the first protocol layer.

For example, the transceiver unit 1802 is further configured to send a ninth message to a network repository function entity, where the ninth message carries configuration information of the third entity, and the configuration information includes first information indicating whether the third entity supports the interface security protection.

Optionally, if the first information included in the configuration information indicates that the third entity supports the interface security protection, the first information further indicates a network slice that supports the interface security protection and that is in one or more network slices of the third entity.

For example, the first information further includes a security protection parameter of the network slice that supports the interface security protection.

The processing unit 1801 may be further configured to: receive, by using the transceiver unit 1802, a seventh message sent by the first entity, where the seventh message indicates the third entity to add the header corresponding to the first protocol layer, and the first protocol layer is used to implement the interface security protection; and perform security and integrity protection on downlink data.

For example, the seventh message carries an Outer Header Creation information element, and the Outer Header Creation information element indicates the third entity to add the header corresponding to the first protocol layer.

Optionally, the processing unit 1801 is specifically configured to: when performing security and integrity protection on the downlink data, process the downlink data at the first protocol layer.

The processing unit 1801 is further configured to: after receiving, by using the transceiver unit 1802, the seventh message sent by the first entity, receive, by using the transceiver unit 1802, an eighth message sent by the first entity, where the eighth message indicates the third entity to remove the header corresponding to the first protocol layer; receive an uplink data packet by using the transceiver unit 1802, where the uplink data packet includes the header corresponding to the first protocol layer; and remove the header that corresponds to the first protocol layer and that is included in the uplink data packet.

For example, the eighth message carries an Outer Header Removal information element, and the Outer Header Removal information element indicates the third entity to remove the header corresponding to the first protocol layer.

In yet another implementation, the interface security protection apparatus may be specifically configured to implement the methods performed by the access network device in the embodiments in FIG. 7 to FIG. 19. The apparatus may be the access network device, or may be a chip, a chip set, or a part of the chip in the access network device that is configured to perform a related method function. The transceiver unit 1802 is configured to receive second information sent by a first entity, where the second information indicates to enable interface security protection. The processing unit 1801 is configured to perform encryption processing on uplink data, and/or perform decryption processing on downlink data. The transceiver unit 1802 is further configured to send, to a second entity, the uplink data on which encryption processing is performed, and/or send, to a terminal device, the downlink data on which decryption processing is performed.

For example, the second information carries a Security Indication information element, and the Security Indication indicates to enable the interface security protection.

Optionally, the second information further carries third information, and the third information is used to determine a security protection parameter.

The processing unit 1801 may be further configured to determine the security protection parameter based on the third information.

Optionally, the processing unit 1801 is specifically configured to: when performing encryption processing on the uplink data, and/or performing decryption processing on the downlink data, process the uplink data and/or the downlink data at a first protocol layer, where the first protocol layer is used to implement the interface security protection.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that for functions or implementations of the modules in embodiments of this application, further refer to related descriptions in the method embodiments.

In a possible manner, the interface security protection apparatus may be shown in FIG. 19. The apparatus may be a communication device or a chip in the communication device. The apparatus may include a processor 1901, a communication interface 1902, and a memory 1903. The processing unit 1801 may be the processor 1901. The transceiver unit 1802 may be the communication interface 1902.

The processor 1901 may be a central processing unit (central processing unit, CPU), a digital processing unit, or the like. The communication interface 1902 may be a transceiver, an interface circuit such as a transceiver circuit, a transceiver chip, or the like. The apparatus further includes the memory 1903, configured to store a program to be executed by the processor 1901. The memory 1903 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1903 is any other medium that can carry or store expected program code in a form of an instruction or a data structure and that can be accessed by a computer, but is not limited thereto.

The processor 1901 is configured to execute program code stored in the memory 1903, and is specifically configured to perform an action of the processing unit 1801. Details are not described in this application again. The communication interface 1902 is specifically configured to perform an action of the transceiver unit 1802. Details are not described in this application again.

In this embodiment of this application, a specific connection medium between the communication interface 1902, the processor 1901 and the memory 1903 is not limited. In this embodiment of this application, the memory 1903, the processor 1901, and the communication interface 1902 are connected by using a bus 1904 in FIG. 19, and the bus is represented by using a bold line in FIG. 19. A connection manner between other components is merely an example for description, and is not limited thereto. The bus may be classified into an address bus, a data bus, a control bus, or the like. For ease of representation, only one bold line is used to represent the bus in FIG. 19, but this does not mean that there is only one bus or only one type of bus.

An embodiment of this application further provides a computer-readable storage medium, configured to store computer software instructions that need to be executed by the foregoing processor, and the computer software instructions include a program that needs to be executed by the foregoing processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. An interface security protection method, comprising:
sending, by a first entity, a first message to a network repository function entity, wherein the first message carries a session parameter;
receiving, by the first entity, a second message sent by the network repository function entity, wherein the second message carries configuration information corresponding to M second entities that meet the session parameter, m second entities in the M second entities support interface security protection, M is a positive integer, and m is a positive integer not greater than M; and
selecting, by the first entity, a target second entity from the m second entities when determining that interface security protection needs to be performed.

2. The method according to claim 1, wherein the first message further comprises a first parameter indicating an interface security protection capability; and
m is equal to M.

3. The method according to claim 1 or 2, wherein configuration information corresponding to the m second entities further comprises a network slice that supports the interface security protection and that is in one or more network slices of the second entities corresponding to the configuration information; and
the selecting, by the first entity, a target second entity from the m second entities comprises:
determining X second entities based on the configuration information corresponding to the m second entities, wherein each of the X second entities has at least one network slice that supports the interface security protection, and X is a positive integer not greater than m; and
selecting at least one second entity from the X second entities as the target second entity.

4. The method according to claim 3, wherein the configuration information of the m second entities further comprises a security protection parameter of the network slice that supports the interface security protection.

5. The method according to any one of claims 1 to 4, wherein after the selecting, by the first entity, a target second entity from the m second entities, the method further comprises:
performing, by the first entity, a handshake at a first protocol layer with a third entity in the target second entity, wherein the first protocol layer is used to implement the interface security protection; and
establishing, by the first entity, a connection at a second protocol layer to the third entity, wherein the second protocol layer is used to implement data packet forwarding control.

6. The method according to any one of claims 1 to 4, wherein after the selecting, by the first entity, a target second entity from the m second entities, the method further comprises:
sending, by the first entity, a third message to a third entity in the target second entity, wherein the third message is used to request to establish a connection at a second protocol layer, and the second protocol layer is used to implement data packet forwarding control;
receiving, by the first entity from the third entity, a rejection message corresponding to the third message;
performing, by the first entity, a handshake at a first protocol layer with the third entity, wherein the first protocol layer is used to implement the interface security protection;
sending, by the first entity, a fourth message to the third entity, wherein the fourth message is used to request to establish the connection at the second protocol layer; and
receiving, by the first entity from the target second entity, a response message corresponding to the fourth message.

7. The method according to any one of claims 1 to 4, wherein after the selecting, by the first entity, a target second entity from the m second entities, the method further comprises:
establishing, by the first entity, a connection at a second protocol layer to a third entity in the target second entity, wherein the second protocol layer is used to implement data packet forwarding control;
sending, by the first entity, a fifth message to the third entity, wherein the fifth message is used to request to establish a session at the second protocol layer;
receiving, by the first entity from the third entity, a rejection message corresponding to the fifth message;
performing, by the first entity, a handshake at a first protocol layer with the third entity, wherein the first protocol layer is used to implement the interface security protection;
sending, by the first entity, a sixth message to the third entity, wherein the sixth message is used to request to establish the session at the second protocol layer; and
receiving, by the first entity from the third entity, a response message corresponding to the sixth message.

8. The method according to any one of claims 1 to 7, wherein the determining, by the first entity, that interface security protection needs to be performed comprises:
determining, by the first entity based on at least one of the following attributes, that interface security protection needs to be performed: a geographical location of the second entity, an attribute of a network slice in a network, and a multi-access edge computing scenario.

9. The method according to any one of claims 1 to 7, wherein after the selecting, by the first entity, a target second entity from the m second entities, the method further comprises:
sending, by the first entity, a seventh message to the third entity in the target second entity, wherein the seventh message indicates the third entity to add a header corresponding to the first protocol layer, and the first protocol layer is used to implement the interface security protection.

10. The method according to claim 9, wherein the seventh message carries an outer header creation Outer Header Creation information element, and the Outer Header Creation information element indicates the third entity to add the header corresponding to the first protocol layer.

11. The method according to claim 9 or 10, wherein after the sending, by the first entity, a seventh message to the third entity in the target second entity, the method further comprises:
sending, by the first entity, an eighth message to the third entity, wherein the eighth message indicates the third entity to remove the header corresponding to the first protocol layer.

12. The method according to claim 11, wherein the eighth message carries an outer header removal Outer Header Removal information element, and the Outer Header Removal information element indicates the third entity to remove the header corresponding to the first protocol layer.

13. The method according to any one of claims 1 to 12, wherein after the selecting, by the first entity, a target second entity from the m second entities, the method further comprises:
sending, by the first entity, second information to an access network device, wherein the second information indicates to enable the interface security protection.

14. The method according to claim 13, wherein the second information carries a security indication Security Indication information element, and the Security Indication indicates to enable the interface security protection.

15. The method according to claim 13 or 14, wherein the second information further carries third information, and the third information is used to determine the security protection parameter.

16. An interface security protection method, comprising:
receiving, by a network repository function entity, a first message sent by a first entity, wherein the first message carries a session parameter;
selecting, by the network repository function entity based on the session parameter, M second entities that meet the session parameter, wherein m second entities in the M second entities support interface security protection, M is a positive integer, and m is a positive integer not greater than M; and
sending, by the network repository function entity, a second message to the first entity, wherein the second message carries configuration information corresponding to the M second entities.

17. The method according to claim 16, wherein the first message further comprises a first parameter indicating an interface security protection capability; and
the selecting, by the network repository function entity based on the session parameter, M second entities comprises:
determining, by the network repository function entity, the M second entities that meet the session parameter and that support the interface security protection capability, wherein m is equal to M.

18. The method according to claim 16 or 17, wherein configuration information corresponding to the m second entities further comprises a network slice that supports the interface security protection and that is in one or more network slices of the second entities corresponding to the configuration information.

19. The method according to claim 18, wherein the configuration information of the m second entities further comprises a security protection parameter of the network slice that supports the interface security protection.

20. An interface security protection method, comprising:
receiving, by a third entity, a third message sent by a first entity, wherein the third message is used to request to establish a connection at a second protocol layer, and the second protocol layer is used to implement data packet forwarding control;
if the connection at the second protocol layer requires security protection, when determining that the third message is not sent based on interface security protection, sending, by the third entity to the first entity, a rejection message corresponding to the third message;
performing, by the third entity, a handshake at a first protocol layer with the first entity, wherein the first protocol layer is used to implement the interface security protection;
receiving, by the third entity, a fourth message sent by the first entity, wherein the fourth message is used to request to establish the connection at the second protocol layer; and
sending, by the third entity to the first entity, a response message corresponding to the fourth message.

21. The method according to claim 20, wherein the determining, by the third entity, that the third message is not sent based on interface security protection comprises:
determining, by the third entity, that the third message does not comprise a header corresponding to the first protocol layer.

22. An interface security protection method, comprising:
establishing, by a third entity, a connection at a second protocol layer to a first entity, wherein the second protocol layer is used to implement data packet forwarding control;
receiving, by the third entity, a fifth message sent by the first entity, wherein the fifth message is used to request to establish a session at the second protocol layer;
if the session at the second protocol layer requires security protection, when determining that the fifth message is not sent based on interface security protection, sending, by the third entity to the first entity, a rejection message corresponding to the fifth message;
performing, by the third entity, a handshake at a first protocol layer with the first entity, wherein the first protocol layer is used to implement the interface security protection;
receiving, by the third entity, a sixth message sent by the first entity, wherein the sixth message is used to request to establish the session at the second protocol layer; and
sending, by the third entity to the first entity, a response message corresponding to the sixth message.

23. The method according to claim 22, wherein the determining, by the third entity, that the fifth message is not sent based on interface security protection comprises:
determining, by the third entity, that the fifth message does not comprise a header corresponding to the first protocol layer.

24. The method according to any one of claims 20 to 23, wherein the method further comprises:
sending, by the third entity, a ninth message to a network repository function entity, wherein the ninth message carries configuration information of the third entity, and the configuration information comprises first information indicating whether the third entity supports the interface security protection.

25. The method according to claim 24, wherein if the first information comprised in the configuration information indicates that the third entity supports the interface security protection, the first information further indicates a network slice that supports the interface security protection and that is in one or more network slices of the third entity.

26. The method according to claim 25, wherein the first information further comprises a security protection parameter of the network slice that supports the interface security protection.

27. The method according to any one of claims 20 to 26, wherein the method further comprises:
receiving, by the third entity, a seventh message sent by the first entity, wherein the seventh message indicates the third entity to add the header corresponding to the first protocol layer, and the first protocol layer is used to implement the interface security protection; and
performing, by the third entity, security and integrity protection on downlink data.

28. The method according to claim 27, wherein the seventh message carries an outer header creation Outer Header Creation information element, and the Outer Header Creation information element indicates the third entity to add the header corresponding to the first protocol layer.

29. The method according to claim 27 or 28, wherein the performing, by the third entity, security and integrity protection on downlink data comprises:
processing, by the third entity, the downlink data at the first protocol layer.

30. The method according to any one of claims 27 to 29, wherein after the receiving, by the third entity, a seventh message sent by the first entity, the method further comprises:
receiving, by the third entity, an eighth message sent by the first entity, wherein the eighth message indicates the third entity to remove the header corresponding to the first protocol layer;
receiving, by the third entity, an uplink data packet, wherein the uplink data packet comprises the header corresponding to the first protocol layer; and
removing, by the third entity, the header that corresponds to the first protocol layer and that is comprised in the uplink data packet.

31. The method according to claim 30, wherein the eighth message carries an outer header removal Outer Header Removal information element, and the Outer Header Removal information element indicates the third entity to remove the header corresponding to the first protocol layer.

32. An interface security protection method, comprising:
receiving, by an access network device, second information sent by a first entity, wherein the second information indicates to enable interface security protection;
performing, by the access network device, encryption processing on uplink data, and/or performing decryption processing on downlink data; and
sending, by the access network device to a second entity, the uplink data on which encryption processing is performed, and/or sending, to a terminal device, the downlink data on which decryption processing is performed.

33. The method according to claim 32, wherein the second information carries a security indication Security Indication information element, and the Security Indication indicates to enable the interface security protection.

34. The method according to claim 32 or 33, wherein the second information further carries third information, and the third information is used to determine a security protection parameter; and
the method further comprises:
determining, by the access network device, the security protection parameter based on the third information.

35. The method according to any one of claims 32 to 34, wherein the performing, by the access network device, encryption processing on uplink data, and/or performing decryption processing on downlink data comprises:
processing, by the access network device, the uplink data and/or the downlink data at a first protocol layer, wherein the first protocol layer is used to implement the interface security protection.

36. An interface security protection apparatus, wherein the apparatus comprises a module configured to implement the method according to any one of claims 1 to 15; or the apparatus comprises a module configured to implement the method according to any one of claims 16 to 19; or the apparatus comprises a module configured to implement the method according to any one of claims 20 to 31; or the apparatus comprises a module configured to implement the method according to any one of claims 32 to 35.

37. A computer-readable storage medium, wherein the computer-readable storage medium stores a program or instructions, and when the program or the instructions is/are read and executed by one or more processors, the method according to any one of claims 1 to 35 is implemented.

38. A computer program product, wherein when the computer program product runs on a communication device, the communication device is enabled to perform the method according to any one of claims 1 to 35.
